# EUROPEAN PATENT APPLICATION

(11) **EP 4 603 405 A1**
(43) Date of publication of application: **20.08.2025**
(21) Application number: 23955005.6
(22) Date of filing: 05.12.2023
(51) Int. Cl.: B65C 9/14, B65G 47/74, B65G 49/00, H01M 10/04, H01M 50/204

(54) **ADHESIVE-TAPE AFFIXING APPARATUS AND ADHESIVE-TAPE AFFIXING METHOD**

(30) Priority: 08.10.2023 CN 202311290043
(71) Applicant: Contemporary Amperex Technology (Hong Kong) Limited, Hong Kong (HK)
(72) Inventor: WU, Kai, Ningde, Fujian 352100 (CN); YANG, Jun, Ningde, Fujian 352100 (CN); LIAO, Shunlin, Ningde, Fujian 352100 (CN); CAO, Xin, Ningde, Fujian 352100 (CN)
(74) Representative: Gong, Jinping
(86) International application number: PCT/CN2023/136444
(87) International publication number: WO 2025/076966

(57) **Abstract**

Embodiments of this disclosure provide an adhesive application device and an adhesive application method, and pertain to the field of battery production technologies. A material storage assembly (2) for storing adhesive films is disposed on a rack (1). A first positioning assembly (3) is disposed on the material storage assembly (2) and at least partially moves together with the material storage assembly (2) to position the adhesive films (100). A material picking assembly (4) disposed on the rack (1) has picking parts (41) for picking up the adhesive films (100) placed in the material storage assembly (2). A release paper removal assembly (5) disposed on the rack (1) is configured to remove release papers (101) of the adhesive films (100). A material preparation platform (6) connected to the rack (1) is configured to bear the adhesive films (100) with the release papers removed, where the picking parts (41) are capable of reciprocating between the material storage assembly (2), the release paper removal assembly (5), and the material preparation platform (6). A second positioning assembly (7) is disposed on the material preparation platform (6) and at least partially moves together with the material preparation platform (6) to position the adhesive films (100). An application assembly (8) disposed on the rack (1) is configured to pick up the adhesive films (100) on the material preparation platform (6) for application. Moving the first positioning assembly (3) and the second positioning assembly (7) to adapt to adhesive films (100) of different sizes, thereby enabling the adhesive application device and the adhesive application method to be compatible with adhesive films (100) of different sizes.

## Description

### CROSS-REFERENCE TO RELATED APPLICATIONS

This disclosure is filed based on Chinese Patent Application No. 202311290043.3, filed on October 8, 2023 and entitled "ADHESIVE APPLICATION DEVICE AND ADHESIVE APPLICATION METHOD", and claims priority to this Chinese patent application, which is incorporated herein by reference in its entirety.

### TECHNICAL FIELD

This disclosure relates to the field of battery production technologies, and in particular, to an adhesive application device and an adhesive application method.

### BACKGROUND

New energy batteries have been put into increasingly wide application in life and industries. For example, new energy vehicles equipped with batteries have been widely used. In addition, batteries have been also increasingly used in the field of energy storage and others.

In the process of producing battery modules or battery packs, battery cells need to undergo adhesive application treatment of adhesive application devices to bond multiple battery cells together. In the related arts, it is difficult for adhesive application devices for applying an adhesive to battery cells to be compatible with adhesive films of various different sizes.

### SUMMARY

To resolve the above technical problems, this disclosure provides an adhesive application device and an adhesive application method, to enable the adhesive application device to be compatible with adhesive films of various different sizes.

This disclosure is implemented through the following technical solutions.

A first aspect of embodiments of this disclosure provides an adhesive application device including:
a rack;
a material storage assembly, disposed on the rack, where the material storage assembly is configured to store adhesive films;
a first positioning assembly, disposed on the material storage assembly, where the first positioning assembly is capable of at least partially moving together with the material storage assembly to position the adhesive films placed in the material storage assembly;
a material picking assembly, disposed on the rack, where the material picking assembly has picking parts, the picking parts are configured to pick up the adhesive films placed in the material storage assembly, and an arrangement direction of the material picking assembly and the rack is a vertical direction;
a release paper removal assembly, disposed on the rack, and configured to remove release papers of the adhesive films picked up by the picking parts;
a material preparation platform, connected to the rack, and configured to bear the adhesive films with the release papers removed, where the picking parts are capable of reciprocating between the material storage assembly, the release paper removal assembly, and the material preparation platform;
a second positioning assembly, disposed on the material preparation platform, where the second positioning assembly is capable of at least partially moving together with the material preparation platform to position the adhesive films placed on the material preparation platform; and
an application assembly, disposed on the rack, where the application assembly is configured to pick up the adhesive films on the material preparation platform for application.

In this embodiment of this disclosure, moving the first positioning assembly and the second positioning assembly can enable the adhesive application device to be compatible with adhesive films of different sizes.

In an embodiment, the first positioning assembly includes:
first positioning components, connected to the material storage assembly;
second positioning components, movably disposed on the material storage assembly;
a first driving apparatus, installed on the material storage assembly, where the first driving apparatus drives the second positioning components to move along a first direction, and the second positioning components and the first positioning components are configured to position the adhesive films along the first direction;
third positioning components, movably disposed on the material storage assembly; and
a second driving apparatus, installed on the material storage assembly, where the second driving apparatus drives the third positioning components to move along a second direction, the second direction intersecting the first direction, and both the first direction and the second direction disposed to intersect the vertical direction, and the third positioning components and the first positioning components are configured to position the adhesive films along the second direction.

In this embodiment of this disclosure, the first positioning component, the second positioning component, and the third positioning component adjust positioning from two different directions to adapt to adhesive films of different sizes on the material storage assembly.

In an embodiment, the material storage assembly includes:
a first driver, installed on the rack;
a rotating platform, installed on the first driver, where the first driver drives the rotating platform to rotate, a plane coinciding with a rotation centerline of the rotating platform is a reference plane, the first positioning assembly is provided on each of two opposite sides of the reference plane, the first positioning component is connected to the rotating platform, the second positioning component and the third positioning component are both movably disposed on the rotating platform, and the first driving apparatus and the second driving apparatus are both installed on the rotating platform, where one side of the two opposite sides of the reference plane corresponding to the rotating platform is a material loading side for loading the adhesive films, and the other side is a material picking side for picking the adhesive films; and
main storages, disposed on the rotating platform, where main storages are provided on each of two opposite sides of the reference plane, and adhesive films stored in the main storages on each side are positioned by the corresponding first positioning assembly.

In this embodiment of this disclosure, the rotation of the rotating platform enables the main storages on the two sides to load and pick materials respectively, allowing for no interference between material loading and picking.

In an embodiment, the main storage on each side includes multiple material storage components arranged sequentially along the first direction, the material storage component is configured to store adhesive films, the material storage component has a first avoidance zone extending along the first direction, and the second positioning component includes:
a first mounting base, where a projection zone of the first mounting base along the vertical direction is a first shadow zone, a projection zone of the material storage component along the vertical direction is a second shadow zone, the first shadow zone overlaps with multiple second shadow zones arranged along the first direction, the first mounting base is disposed below the rotating platform, and the first driving apparatus drives the first mounting base to move along the first direction; and
a first positioning column, connected above the first mounting base, where the first positioning column passes through the rotating platform, the first positioning column is disposed at a corresponding position of each material storage component, and the first positioning column is capable of moving within the corresponding first avoidance zone.

In this embodiment of this disclosure, the first mounting base drives the multiple first positioning columns to move together, improving positioning efficiency.

In an embodiment, the adhesive application device further includes detectors, the first mounting base has a first avoidance cavity, the rotating platform has second avoidance cavities, the material storage component has a third avoidance cavity, the detector has a detection part configured to generate a detection signal, a projection zone of the first avoidance cavity, a projection zone of the second avoidance cavity, and a projection zone of the third avoidance cavity along the vertical direction are all covered by a projection zone of the detection part, the detection signal of the detection part passes through the first avoidance cavity, the second avoidance cavity, and the third avoidance cavity, and when the rotating platform rotates, the detector is below the first mounting base and the detector is detached from the rotating platform.

In this embodiment of this disclosure, the detection signal of the detector is avoided by using the first avoidance cavity, the second avoidance cavity, and the third avoidance cavity, so that the detector detects whether there are adhesive films on the material storage components.

In an embodiment, the detectors are provided on two opposite sides of the reference plane, detectors corresponding to main storages on the material loading side of the main storages on the two sides are connected to the rack, the material storage component has a bearing plane configured to bear the adhesive films, the material storage assembly further includes lifting apparatuses disposed on the rack, the lifting apparatuses are located at positions corresponding to main storages on the material picking side of the main storages on the two sides, the lifting apparatus is configured to drive the material storage component on the material picking side to at least partially move to lift the bearing plane, the detector corresponding to the main storage on the material picking side is installed on the lifting apparatus, the lifting apparatus drives the detector to lift, and when the lifting apparatus descends to a lowest position, the lifting apparatus and the corresponding detector are both below the first mounting base.

In this embodiment of this disclosure, the detector on the material loading side is connected to the rack, the detector on the material picking side is connected to the lifting apparatus, and the lifting apparatus is avoided by using the first avoidance cavity, the second avoidance cavity, and the third avoidance cavity that avoid the detection signal of the detector.

In an embodiment, the main storage on each side includes multiple material storage components arranged sequentially along the first direction, the material storage component is configured to store adhesive films, the material storage component has a second avoidance zone, and the third positioning component includes:
a second mounting base, where the second mounting base extends along the first direction to positions corresponding to the multiple material storage components, the second mounting base is disposed on the rotating platform, and the second driving apparatus drives the second mounting base to move along the second direction; and
a positioning column device set, connected above the second mounting base, where the positioning column device set is disposed at a corresponding position of each material storage component, and the positioning column device set is capable of moving within the corresponding second avoidance zone.

In this embodiment of this disclosure, the second mounting base drives the positioning device set to move together, improving positioning efficiency.

In an embodiment, the material storage component has a bearing plane configured to bear the adhesive films, the second avoidance zone includes a first sub-zone and a second sub-zone, both the first sub-zone and the second sub-zone extend along the second direction, the first sub-zone is located on a side of the second sub-zone facing towards the corresponding bearing plane along the first direction, and the positioning column device set includes:
a second positioning column, connected above the second mounting base, where the second positioning column is disposed at a corresponding position of each material storage component, and the second positioning column is capable of moving within the first sub-zone, and
a third positioning column, connected above the second mounting base, where the third positioning column is disposed at a corresponding position of each material storage component, the third positioning column is capable of moving within the second sub-zone, and the third positioning column is located on a side of the second positioning column facing away from the reference plane along the second direction.

In this embodiment of this disclosure, the second positioning column moves along the second direction to position adhesive films of different sizes along the second direction. The third positioning column is used to adapt to a spacing of ears on two sides of adhesive films along the second direction.

In an embodiment, a length direction of the bearing plane is disposed along the second direction, and the second positioning column is plate-shaped.

In this embodiment of this disclosure, the plate-shaped second positioning column stably pushes adhesive films for long-distance movement.

In an embodiment, the positioning column device set further includes a reinforcing rib, and the reinforcing rib is connected to both the second mounting base and the plate-shaped second positioning column.

In this embodiment of this disclosure, the reinforcing ribs enhance the strength of the second positioning column and improve the deformation resistance of the second positioning column, enabling the second positioning column to stably push and position adhesive films.

In an embodiment, the material storage component includes a guide mechanism and a support mechanism disposed on the guide mechanism, the support mechanism is configured to store the adhesive films, the guide mechanism guides the support mechanism to move along the vertical direction, an arrangement direction of the guide mechanism and the support mechanism intersects the vertical direction, the second avoidance zone is formed in the support mechanism, and the second mounting base includes:
a common base, where the common base extends along the first direction to positions corresponding to the multiple support mechanisms, the common base is disposed on the rotating platform, the common base is located on a side of the guide mechanism facing towards the reference plane along the second direction, and the second driving apparatus drives the common base to move along the second direction; and
a base, connected to the common base, where the base is located on a side of the common base facing away from the reference plane along the second direction, the base is disposed at a position corresponding to each support mechanism, the positioning column device set is connected above the base, and the base is capable of moving below the support mechanism along the second direction.

In this embodiment of this disclosure, the base mitigates hanging-out of the positioning column device set, improving the deformation resistance of the positioning column device set.

In an embodiment, the guide mechanism and the support mechanism are arranged along the first direction, and a length direction of the support mechanism is disposed along the second direction.

In this embodiment of this disclosure, the guide mechanism separates the two support mechanisms, reducing interference between the two adjacent support mechanisms. The length direction of the support mechanism is disposed along the second direction, and the support mechanism spans the guide mechanism with a large span, enabling the guide mechanism to stably guide the support mechanism to move.

In an embodiment, the second mounting base is located above the rotating platform.

In this embodiment of this disclosure, the position setting of the second mounting base can reduce unnecessary openings and increase the strength of the rotating platform.

In an embodiment, the main storages are provided on each of two opposite sides of the reference plane along the second direction, the first positioning assembly has operation parts configured for manual operation to provide power, both the first driving apparatus and the second driving apparatus have the operation part, the operation part is located on a side of each main storage facing away from the reference plane along an arrangement direction of the main storages on the two sides, and the first driving apparatus includes:
a rotating shaft, where an axial direction of the rotating shaft is disposed along the second direction, and the rotating shaft has a corresponding operation part;
a first bevel gear, connected to an end of the rotating shaft facing towards the reference plane, so that the first bevel gear rotates with the rotating shaft;
a second bevel gear, meshing with the first bevel gear;
a lead screw, rotatably connected to the rotating platform, where the second bevel gear is connected to an end of the lead screw, so that the second bevel gear rotates with the lead screw, and an axial direction of the lead screw is disposed along the first direction; and
a connecting apparatus, threadedly connected to the lead screw so that the lead screw drives the connecting apparatus to move along the first direction, where the connecting apparatus is installed on the second positioning component.

In this embodiment of this disclosure, changing directions of the first bevel gear and the second bevel gear facilitates an operator to perform operation adjustment.

In an embodiment, the material preparation platform is formed with reference positioning parts, and the second positioning assembly includes:
a fourth positioning component, movably disposed on the material preparation platform;
a third driving apparatus, installed on the material preparation platform, where the third driving apparatus drives the fourth positioning component to move along a third direction, and the fourth positioning component and the reference positioning part are configured to position the adhesive films along the third direction;
a fifth positioning component, movably disposed on the material preparation platform; and
a fourth driving apparatus, installed on the material preparation platform, where the fourth driving apparatus drives the fifth positioning component to move along a fourth direction, the fourth direction is disposed to intersect the third direction, both the third direction and the fourth direction are set to intersect the vertical direction, and the fifth positioning component and the reference positioning part are configured to position the adhesive films along the fourth direction.

In this embodiment of this disclosure, moving and adjusting the reference positioning part, the fourth positioning component, and the fifth positioning component from two different directions to position adhesive films of different sizes on the material preparation platform.

In an embodiment, the material preparation platform has multiple material preparation parts, where the material preparation parts are configured to bear the adhesive films with the release papers removed, the multiple material preparation parts are arranged sequentially along the third direction, the reference positioning part is disposed at a position corresponding to each material preparation part, the material preparation part has third avoidance zones extending along the third direction, and the fourth positioning component includes:
a third mounting base, disposed below the material preparation platform, where the third driving apparatus drives the third mounting base to move along the third direction; and
first positioning pieces, connected above the third mounting base, where the first positioning piece has multiple first positioning protrusion parts passing through the material preparation platform, the multiple first positioning protrusion parts are spaced apart along the fourth direction, the first positioning piece is disposed at a corresponding position of each material preparation part, and the first positioning protrusion part is capable of moving within the corresponding third avoidance zone.

In this embodiment of this disclosure, the multiple first positioning protrusion parts spaced apart stably push adhesive films to move.

In an embodiment, each material preparation part has multiple corresponding third avoidance zones, the multiple third avoidance zones are spaced apart along the fourth direction, and the first positioning protrusion part is disposed at a corresponding position of each third avoidance zone.

In this embodiment of this disclosure, a material preparation part between two spaced third avoidance zones can still bear adhesive films well, reducing the impact of disposition of the third avoidance zone on adhesive film bearing of the material preparation part.

In an embodiment, the material preparation platform has multiple material preparation parts, where the material preparation parts are configured to bear the adhesive films with the release papers removed, the multiple material preparation parts are arranged sequentially along the third direction, the reference positioning part is disposed at a position corresponding to each material preparation part, the material preparation part has fourth avoidance zones extending along the fourth direction, and the fifth positioning component includes:
a fourth mounting base, disposed on the material preparation platform, where the fourth driving apparatus drives the fourth mounting base to move along the fourth direction; and
second positioning pieces, connected to the fourth mounting base, where the second positioning piece has multiple second positioning protrusion parts, the multiple second positioning protrusion parts are spaced apart along the third direction, the second positioning piece is disposed at a corresponding position of each material preparation part, and the second positioning protrusion part is capable of moving within the corresponding fourth avoidance zone.

In this embodiment of this disclosure, the multiple second positioning protrusion parts spaced apart stably push adhesive films to move.

In an embodiment, each material preparation part has multiple corresponding fourth avoidance zones, the multiple fourth avoidance zones are spaced apart along the third direction, and the second positioning protrusion part is disposed at a corresponding position of each fourth avoidance zone.

In this embodiment of this disclosure, a material preparation part between two spaced fourth avoidance zones can still bear adhesive films well, reducing the impact of disposition of the fourth avoidance zone on adhesive film bearing of the material preparation part.

In an embodiment, both the material preparation part and the reference positioning part are located below the fourth mounting base.

In this embodiment of this disclosure, reducing unnecessary openings in the material preparation parts helps increase the strength of the rotating platform and reduce the possibility of interference between the material preparation parts and the fourth mounting base.

In an embodiment, the material preparation platform includes:
a workbench, connected to the rack, where the second positioning assembly is disposed on the workbench; and
trays, installed above the workbench, where ribs configured to bear the adhesive films with the release papers removed are above the tray, multiple ribs are provided, and the multiple ribs are spaced apart.

In this embodiment of this disclosure, the ribs spaced apart reduce an adhesion force between adhesive films and the tray.

In an embodiment, the material picking assembly includes:
a first transfer part, disposed on the rack; and
material picking apparatuses, disposed on the first transfer part, where the first transfer part drives the material picking apparatus to move, the material picking apparatus includes a first airflow distributor and a first suction assembly connected to each other, the first airflow distributor is disposed on the first transfer part, the first airflow distributor has first air chambers and negative pressure interfaces, multiple first air chambers are provided, the multiple first air chambers are separated from each other, each first air chamber communicates with the corresponding negative pressure interface, the picking part is formed on the first suction assembly, and each first air chamber communicates with the corresponding picking part.

In this embodiment of this disclosure, the multiple first air chambers are separated from each other, improving a suction force generated by suctioning a single first air chamber to create negative pressure. Some of the first air chambers are selectively suctioned to create negative pressure to adapt to sucking-up of adhesive films of different sizes.

In an embodiment, one of the first air chambers is a main air chamber, one of the first air chambers is a first extension air chamber, the first extension air chamber spans a side of the main air chamber along a fifth direction and a side of the main air chamber along a sixth direction, the fifth direction and the sixth direction are set to intersect each other, both the fifth direction and the sixth direction are set to intersect an arrangement direction of the first airflow distributor and the first suction assembly, one of the first air chambers is a second extension air chamber, the second extension air chamber is located on a side of the first extension air chamber along the fifth direction, one of the first air chambers is a third extension air chamber, and the third extension air chamber is located on a side of the first extension air chamber along the sixth direction.

In this embodiment of this disclosure, smaller adhesive films can be sucked up by the picking part corresponding to the main air chamber.

Larger adhesive films can be sucked up by the picking parts corresponding to the main air chamber and the first extension air chamber. The second extension air chamber and the third extension air chamber are separated, which helps to improve a sucking-up force when one of them is suctioned to create negative pressure.

In an embodiment, the first transfer part includes a first transfer body and a first mounting rack disposed on the first transfer body, the first transfer body drives the first mounting rack to move, the first mounting rack is connected to a side of the first airflow distributor facing away from the first suction assembly, the negative pressure interface is located on an outer side surface of the first airflow distributor, and an arrangement direction of the first airflow distributor and the first suction assembly intersects an orientation of the negative pressure interface.

In this embodiment of this disclosure, the negative pressure interface opens laterally, which can reduce the possibility of interference between a large number of negative pressure pipes connected to the negative pressure interfaces and the first mounting rack.

In an embodiment, a negative pressure interface communicating with the main air chamber is a first negative pressure interface, the first negative pressure interface is disposed on both a side of the main air chamber along the fifth direction and a side of the main air chamber along the sixth direction, a negative pressure interface communicating with the first extension air chamber is a second negative pressure interface, the second negative pressure interface is disposed on a side of the first extension air chamber facing towards the corresponding first negative pressure interface along the fifth direction, the second negative pressure interface is disposed on a side of the first extension air chamber facing towards the corresponding first negative pressure interface along the sixth direction, a negative pressure interface communicating with the second extension air chamber is a third negative pressure interface, the third negative pressure interface is disposed on a side of the second extension air chamber facing away from the first extension air chamber along the fifth direction, a negative pressure interface communicating with the third extension air chamber is a fourth negative pressure interface, and the fourth negative pressure interface is disposed on a side of the third extension air chamber facing away from the first extension air chamber along the sixth direction.

In this embodiment of this disclosure, the arrangement of the negative pressure interfaces can improve the negative pressure suction force on the adhesive films as much as possible.

In an embodiment, the first suction assembly includes:
first suction nozzles, installed on the first airflow distributor, where each first air chamber communicates with the corresponding first suction nozzle, and the picking part is formed on the first suction nozzle; and
a first protection block, connected to a side of the first airflow distributor facing towards the first suction nozzle, where the first protection block has an avoidance hole, the avoidance hole runs through the first protection block, the first suction nozzle passes through the avoidance hole, and the first suction nozzle partially protrudes from a side of the first protection block facing away from the first airflow distributor.

In this embodiment of this disclosure, the first protection block reduces the impact of external shocks and interference on the first suction nozzle.

In an embodiment, the avoidance hole is a long hole, multiple avoidance holes are provided, the multiple avoidance holes are spaced apart, and multiple first suction nozzles within each avoidance hole are arranged sequentially along a length direction of the avoidance hole.

In this embodiment of this disclosure, the width direction of the avoidance hole is relatively narrow, the avoidance holes are spaced apart, and the zone between two avoidance holes can be used for connection and reinforcement. This allows the first protection block to be flexibly and firmly connected to the first airflow distributor.

In an embodiment, the application assembly includes:
a second transfer part, disposed on the rack; and
application apparatuses, disposed on the second transfer part, where the second transfer part drives the application apparatuses to move to pick up the adhesive films on the material preparation platform for application, the application apparatus includes a second airflow distributor and a second suction assembly connected to each other, the second airflow distributor is disposed on the second transfer part, the second airflow distributor has second air chambers and suction interfaces, multiple second air chambers are provided, the multiple second air chambers are separated from each other, each second air chamber communicates with the corresponding suction interface, the second suction assembly has suction parts configured to suck the adhesive films, and each second air chamber communicates with the corresponding suction part.

In this embodiment of this disclosure, selectively suctioning some of the second air chambers to create negative pressure adapts to the sucking-up of adhesive films of different sizes.

In an embodiment, the second transfer part includes a second transfer body and a second mounting rack disposed on the second transfer body, the second transfer body drives the second mounting rack to move, the second mounting rack is connected to a side of the second airflow distributor facing away from the second suction assembly, the suction interface is located on an outer side surface of the second airflow distributor, and an arrangement direction of the second airflow distributor and the second suction assembly intersects an orientation of the suction interface; one of the second air chambers is an edge air chamber, the edge air chamber includes a first sub-chamber and a second sub-chamber communicating with each other, the first sub-chamber extends along a seventh direction, the second sub-chamber extends along an eighth direction, the seventh direction and the eighth direction are set to intersect each other, both the seventh direction and the eighth direction are set to intersect the arrangement direction of the second airflow distributor and the second suction assembly, a suction interface communicating with the first sub-chamber is a first suction interface, the first suction interface is located on an end of the first sub-chamber facing away from the second sub-chamber along the seventh direction, a suction interface communicating with the second sub-chamber is a second suction interface, and the second suction interface is located on an end of the second sub-chamber facing away from the first sub-chamber along the eighth direction; and all the second air chambers except for the edge air chamber are auxiliary air chambers, the auxiliary air chambers are located on a side of the first sub-chamber facing towards the second suction interface, and the auxiliary air chambers are located on a side of the second sub-chamber facing towards the first suction interface.

In this embodiment of this disclosure, lateral arrangement of the suction interfaces reduces the possibility of interference between external negative pressure pipes connected to the suction interfaces and the first mounting rack. The suction interfaces corresponding to the auxiliary air chambers are all located on the side of the edge air chamber facing towards the auxiliary air chambers, simplifying the structure of the second airflow distributor and reducing processing costs.

In an embodiment, the release paper removal assembly includes:
a paper removal driving apparatus, disposed on the rack;
an installation shaft, disposed on the paper removal driving apparatus, where the paper removal driving apparatus drives the installation shaft to move;
adjustment seats having a locked state and an unlocked state, where the adjustment seat moves with the installation shaft in the locked state, and the adjustment seat is capable of moving relative to the installation shaft along an axial direction of the installation shaft in the unlocked state; and
clamping mechanisms, disposed on the adjustment seats to move with the adjustment seats, where the clamping mechanisms are configured to clamp the release paper of the adhesive film, multiple clamping mechanisms are provided, and the multiple clamping mechanisms are spaced apart along the axial direction of the installation shaft.

In this embodiment of this disclosure, the position of the adjustment seat on the installation shaft is adjusted to adapt to clamping of release papers of adhesive films of different sizes.

A second aspect of the embodiments of this disclosure provides an adhesive application method including:
driving a first positioning assembly to move to adjust a size of a zone on a material storage assembly for storing adhesive films;
loading the corresponding adhesive films onto the material storage assembly;
picking up, by picking parts of a material picking assembly, the adhesive films placed in the material storage assembly;
moving, by the picking parts of the material picking assembly, the picked adhesive films to a release paper removal assembly;
driving the release paper removal assembly to remove release papers of the adhesive films;
moving, by the picking parts of the material picking assembly, the adhesive films with the release papers removed to a material preparation platform;
driving a second positioning assembly to move to position the adhesive films on the material preparation platform;
driving an application assembly to pick up the positioned adhesive films on the material preparation platform; and
moving the adhesive films picked up by the application assembly to adhesive surfaces of objects under application.

In this embodiment of this disclosure, the movement adjustment of the first positioning assembly and the second positioning assembly enables the application assembly to be compatible with adhesive films of different sizes.

In an embodiment, the first positioning assembly includes first positioning components, second positioning components, a first driving apparatus, third positioning components, and a second driving apparatus, and the driving a first positioning assembly to move to adjust a size of a zone on a material storage assembly for storing adhesive films includes:
driving, by the first driving apparatus, the second positioning components to move along a first direction so as to adjust a first-direction size of the zone on the material storage assembly for storing the adhesive films; and
driving, by the second driving apparatus, the third positioning components to move along a second direction so as to adjust a second-direction size of the zone on the material storage assembly for storing the adhesive films.

In this embodiment of this disclosure, the second positioning component and the third positioning component move and adjust from two different directions to adapt to positioning of adhesive films of different sizes on the material storage assembly.

In an embodiment, the second positioning assembly includes a fourth positioning component, a third driving apparatus, a fifth positioning component, and a fourth driving apparatus, and the driving a second positioning assembly to move to position the adhesive films on the material preparation platform includes:
driving, by the third driving apparatus, the fourth positioning component to move along a third direction so as to adjust a distance between the fourth positioning component and a reference positioning part along the third direction; and
driving, by the fourth driving apparatus, the fifth positioning component to move along a fourth direction so as to adjust a distance between the fifth positioning component and the reference positioning part along the fourth direction.

In this embodiment of this disclosure, the fourth positioning component and the fifth positioning component move and adjust from two different directions to adapt to positioning of adhesive films of different sizes on the material preparation platform.

In an embodiment, the picking up, by picking parts of a material picking assembly, the adhesive films placed in the material storage assembly includes:
suctioning corresponding first air chambers through corresponding negative pressure interfaces to create negative pressure, to pick up the adhesive films placed in the material storage assembly.

In this embodiment of this disclosure, some of the first air chambers being selectively suctioned to create negative pressure adapts to sucking-up of adhesive films of different sizes, reducing energy consumption.

In an embodiment, the driving an application assembly to pick up the positioned adhesive films on the material preparation platform includes:
suctioning corresponding second air chambers through corresponding suction interfaces to create negative pressure, to pick up the adhesive films placed on the material preparation platform.

In this embodiment of this disclosure, some of the second air chambers being selectively suctioned to create negative pressure adapts to sucking-up of adhesive films of different sizes, reducing energy consumption.

In an embodiment, the two opposite sides of the reference plane corresponding to the rotating platform include a material loading side on one side and a material picking side on the other side, the adhesive application method further includes:
when any material storage component on the material picking side is empty, driving, by the first driver, the rotating platform to rotate to swap positions of main storages on the two sides.

In this embodiment of this disclosure, when the material storage components on the material picking side are empty, the rotating platform is rotated to swap positions, to perform material loading on the empty material storage components, and material storage components finishing adhesive film loading and positioning are rotated to the material picking side for the material picking assembly to pick up the adhesive films. Material loading and material picking do not interfere with each other.

### Effects of the present invention

With the first positioning assembly at least partially moving together with the material storage assembly in the embodiments of this disclosure, the positioning position of the first positioning assembly relative to the material storage assembly changes, thereby enabling the positioning of adhesive films of different sizes on the material storage assembly. Adhesive films of different sizes on the material storage assembly can be accurately positioned by the first positioning assembly, facilitating the material picking assembly to grab the adhesive films on the material storage assembly. Since the second positioning assembly is capable of at least partially moving together with the material preparation platform, the positioning position of the second positioning assembly relative to the material preparation platform changes, thereby enabling the positioning of adhesive films of different sizes on the material preparation platform. Adhesive films of different sizes on the material preparation platform can be accurately positioned by the second positioning assembly, facilitating the application assembly to grab the adhesive films on the material preparation platform. The material storage assembly and the first positioning assembly can be suitable for loading adhesive films of different sizes. The material picking assembly picks up the adhesive films on the material storage assembly and moves them to the release paper removal assembly for paper removal operation. The material picking assembly places the adhesive films with the release papers removed on the material preparation platform. The material preparation platform and the second positioning assembly can be suitable for placing the adhesive films of different sizes with the release papers removed at accurate positions, so that the application assembly picks up the adhesive films on the material preparation platform for application. Therefore, adhesive films of different sizes can be loaded onto the adhesive application device and applied to objects under application through the adhesive application device, achieving compatibility of the adhesive application device with adhesive films of various different sizes. Adapting to adhesive films of various different sizes through movement and adjustment spares the need of replacing the hardware structure of the adhesive application device to fit adhesive films of different sizes.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this disclosure. In addition, in all the accompanying drawings, same parts are indicated by same accompanying symbols. In the accompanying drawings:
FIG. 1 is a schematic structural diagram of an adhesive application device according to an embodiment of this disclosure;
FIG. 2 is a schematic structural diagram of a material storage assembly according to an embodiment of this disclosure;
FIG. 3 is an assembly diagram of a material storage assembly and a rack according to an embodiment of this disclosure;
FIG. 4 is a cross-sectional view of position A-A in FIG. 3;
FIG. 5 is an enlarged view of position C in FIG. 4;
FIG. 6 is a cross-sectional view of position B-B in FIG. 3;
FIG. 7 is an enlarged view of position D in FIG. 6;
FIG. 8 is an enlarged view of position E in FIG. 7;
FIG. 9 is an assembly diagram of material storage components, a rotating platform, first positioning components, and second positioning components according to an embodiment of this disclosure, with the multiple material storage components arranged along a first direction;
FIG. 10 is a schematic structural diagram of material storage components according to an embodiment of this disclosure;
FIG. 11 is an assembly diagram of a material storage component, a first positioning component, a first column, second columns, and a third column according to an embodiment of this disclosure;
FIG. 12 is an assembly diagram of a rotating platform, second positioning components, and a first driving apparatus according to an embodiment of this disclosure, showing a specific structure of the first driving apparatus;
FIG. 13 is an assembly diagram of a rotating platform, second positioning components, and a first driving apparatus according to an embodiment of this disclosure, showing second avoidance cavities;
FIG. 14 is an assembly diagram of a rotating platform, third positioning components, and a second driving apparatus according to an embodiment of this disclosure;
FIG. 15 is a schematic structural diagram of an adhesive film according to an embodiment of this disclosure;
FIG. 16 is an assembly diagram of a material preparation platform, a rack, and an application assembly according to an embodiment of this disclosure;
FIG. 17 is an enlarged view of position F in FIG. 16;
FIG. 18 is an assembly diagram of a material preparation platform and a second positioning assembly according to an embodiment of this disclosure, showing no third driving apparatus;
FIG. 19 is an assembly diagram of a material preparation platform and a second positioning assembly according to an embodiment of this disclosure, showing a third driving apparatus below the material preparation platform;
FIG. 20 is an assembly diagram of a fourth positioning component and a third driving apparatus according to an embodiment of this disclosure;
FIG. 21 is an assembly diagram of a material preparation platform and a second positioning assembly according to an embodiment of this disclosure, showing a fourth driving apparatus;
FIG. 22 is a schematic structural diagram of a fifth positioning component according to an embodiment of this disclosure;
FIG. 23 is a schematic structural diagram of a tray according to an embodiment of this disclosure;
FIG. 24 is a schematic structural diagram of a material picking assembly according to an embodiment of this disclosure, showing four material picking apparatuses;
FIG. 25 is an enlarged view of position G in FIG. 24;
FIG. 26 is an assembly diagram of a first mounting rack and a material picking apparatus according to an embodiment of this disclosure;
FIG. 27 is a cross-sectional view of position H-H in FIG. 26;
FIG. 28 is a cross-sectional view of position I-I in FIG. 26;
FIG. 29 is a schematic structural diagram of an application assembly according to an embodiment of this disclosure, showing two application apparatuses;
FIG. 30 is an assembly diagram of a second mounting rack and an application apparatus according to an embodiment of this disclosure;
FIG. 31 is a cross-sectional view of position J-J in FIG. 30;
FIG. 32 is an assembly diagram of a rack and a release paper removal assembly according to an embodiment of this disclosure;
FIG. 33 is a schematic structural diagram of an adjustment seat according to an embodiment of this disclosure;
FIG. 34 is a cross-sectional view of position K-K in FIG. 33;
FIG. 35 is a flowchart of an adhesive application method according to an embodiment of this disclosure, showing main steps of the adhesive application method;
FIG. 36 is a flowchart of an adhesive application method according to an embodiment of this disclosure, showing specific adjustment steps of a first positioning assembly and a second positioning assembly; and
FIG. 37 is a flowchart of an adhesive application method according to an embodiment of this disclosure, showing a complete process from adhesive film loadings to adhesive application.

Description of reference signs
rack 1; material storage assembly 2; first driver 21; rotating platform 22; reference plane 221; second avoidance cavity 222; main storage 23; material storage component 231; first avoidance zone 2311; third avoidance cavity 2312; bearing plane 2313; second avoidance zone 2314; first sub-zone 23141; second sub-zone 23142; guide mechanism 2315; support mechanism 2316; lifting apparatus 24; divider 25; first positioning assembly 3; first positioning component 31; fourth positioning column 311; fifth positioning column 312; second positioning component 32; first mounting base 321; first avoidance cavity 3211; first positioning column 322; column body 3221; substrate 3222; first driving apparatus 33; rotating shaft 331; first bevel gear 332; second bevel gear 333; lead screw 334; connecting apparatus 335; shaft body 3311; handle 3312; third positioning component 34; second mounting base 341; common base 3411; base 3412; positioning column device set 342; second positioning column 3421; third positioning column 3422; reinforcing rib 3423; second driving apparatus 35; operation part 36; material picking assembly 4; picking part 41; first transfer part 42; first transfer body 421; first mounting rack 422; material picking apparatus 43; first airflow distributor 431; main air chamber 43111; first extension air chamber 43112; second extension air chamber 43113; third extension air chamber 43114; first negative pressure interface 43121; second negative pressure interface 43122; third negative pressure interface 43123; fourth negative pressure interface 43124; first suction assembly 432; first suction nozzle 4321; first protection block 4322; avoidance hole 43221; release paper removal assembly 5; paper removal driving apparatus 51; installation shaft 52; adjustment seat 53; seat body 531; locking block 532; adjustment gap 533; connecting member 534; installation cavity 535; clamping mechanism 54; material preparation platform 6; reference positioning part 61; material preparation part 62; third avoidance zone 621; fourth avoidance zone 622; workbench 63; tray 64; rib 641; second positioning assembly 7; fourth positioning component 71; third mounting base 711; first positioning piece 712; first positioning protrusion part 7121; third driving apparatus 72; second driver 721; first transmission mechanism 722; fifth positioning component 73; fourth mounting base 731; second positioning piece 732; second positioning protrusion part 7321; fourth driving apparatus 74; third driver 741; second transmission mechanism 742; transition piece 743; application assembly 8; second transfer part 81; second transfer body 811; second mounting rack 812; application apparatus 82; second airflow distributor 821; edge air chamber 8211; first sub-chamber 82111; second sub-chamber 82112; first suction interface 82121; second suction interface 82122; third suction interface 82123; auxiliary air chamber 8213; second suction assembly 822; suction part 8221; second suction nozzle 8222; second protection block 8223; detector 9; detection part 91; adhesive film 100; release paper 101; ear 1011; and adhesive film body 102.

### DESCRIPTION OF EMBODIMENTS

The following describes in detail the embodiments of technical solutions of this disclosure with reference to the accompanying drawings. The following embodiments are merely intended for a clearer description of the technical solutions of this disclosure and therefore are used as just examples which do not constitute any limitations on the protection scope of this disclosure.

Unless otherwise defined, all technical and scientific terms used herein shall have the same meanings as commonly understood by those skilled in the art to which this disclosure belongs. The terms used herein are merely intended to describe the specific embodiments but not intended to constitute any limitation on this disclosure. The terms in the embodiments of this disclosure are intended to cover a non-exclusive inclusion.

In the description of the embodiments of this disclosure, the terms "first", "second", "third", and the like are merely intended to distinguish between different objects, and shall not be understood as any indication or implication of relative importance or any implicit indication of the number, sequence or primary-secondary relationship of the technical features indicated. In the description of the embodiments of this disclosure, "multiple" means at least two unless otherwise specifically stated.

In this specification, reference to "embodiment" means that specific features, structures or characteristics described with reference to the embodiment may be incorporated in at least an embodiment of this disclosure. The word "embodiment" appearing in various positions in the specification does not necessarily refer to the same embodiment or an independent or alternative embodiment that is exclusive of other embodiments. A person skilled in the art can clearly and implicitly understand that the embodiments described in the specification can be combined with other embodiments.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this disclosure, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in the embodiments of this disclosure as appropriate to specific situations.

In the description of the embodiments of this disclosure, unless otherwise explicitly specified and defined, the technical term "contact" should be understood in a broad sense, which can be direct contact, or contact through an intermediate medium layer, and can be contact with basically no interaction force between the two in contact, or contact with interaction force between the two in contact.

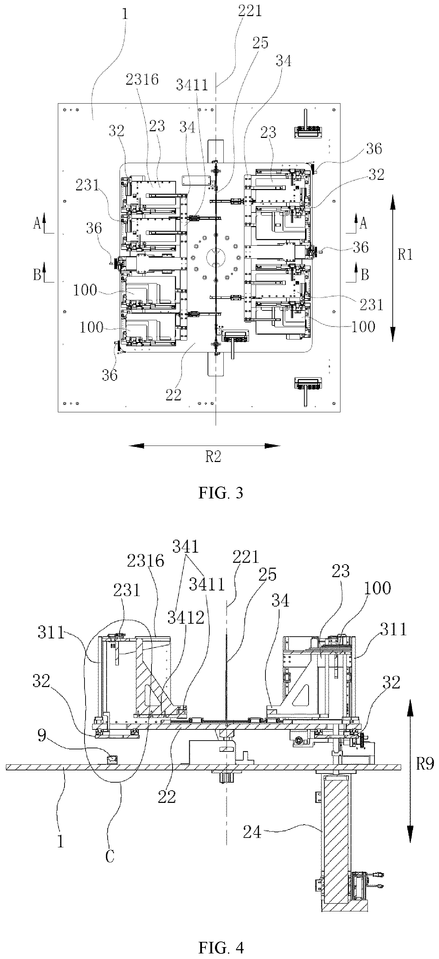

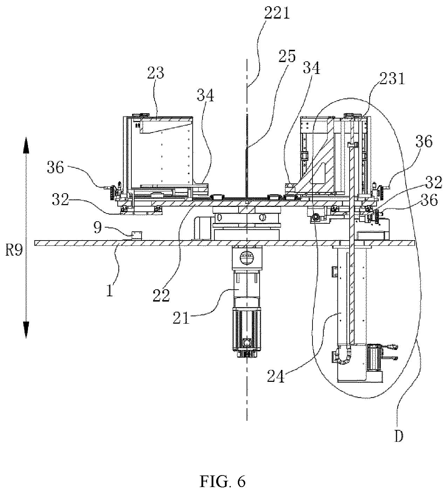

In the description of the embodiments of this disclosure, "above", "below", "top", "bottom", orientation or positional relationships are based on the orientation or positional relationships shown in FIGs. 4 and 6. It should be understood that these orientation terms are only for ease of describing this disclosure and simplifying description, and are not intended to indicate or imply that a devices or element referred to must have a specific orientation, and be constructed and operated in a specific orientation. Therefore, they should not be understood as a limitation on this disclosure.

Referring to FIGs. 4 and 6, the vertical direction of this embodiment of this disclosure is the direction indicated by arrow R9 in the figure.

Referring to FIG. 3, the first direction of this embodiment of this disclosure is the direction indicated by arrow R1 in the figure.

Referring to FIG. 3, the second direction of this embodiment of this disclosure is the direction indicated by arrow R2 in the figure.

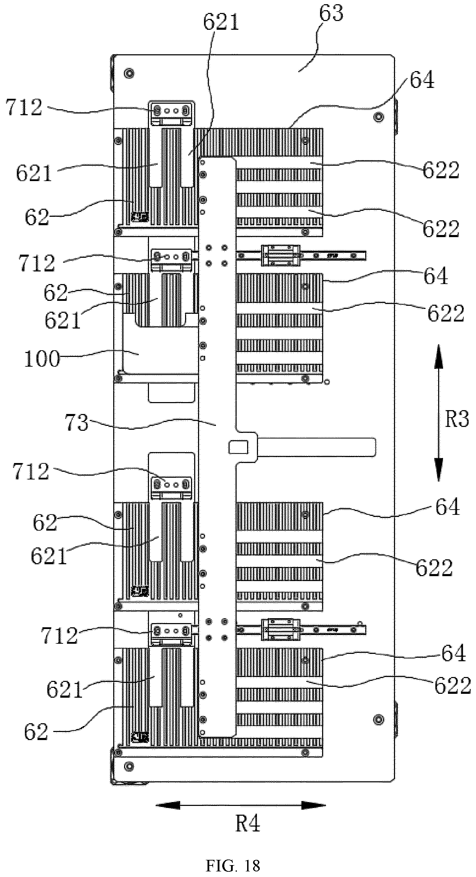

Referring to FIG. 18, the third direction of this embodiment of this disclosure is the direction indicated by arrow R3 in the figure.

Referring to FIG. 18, the fourth direction of this embodiment of this disclosure is the direction indicated by arrow R4 in the figure.

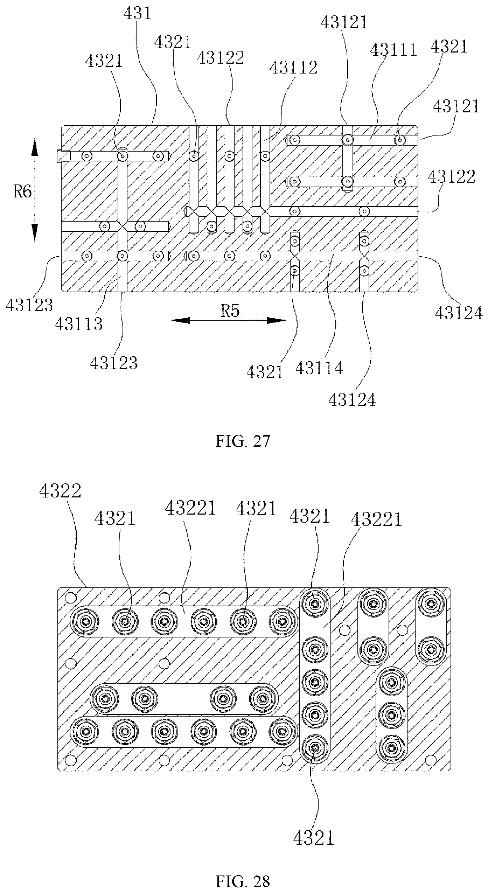

Referring to FIG. 27, the fifth direction of this embodiment of this disclosure is the direction indicated by arrow R5 in the figure.

Referring to FIG. 27, the sixth direction of this embodiment of this disclosure is the direction indicated by arrow R6 in the figure.

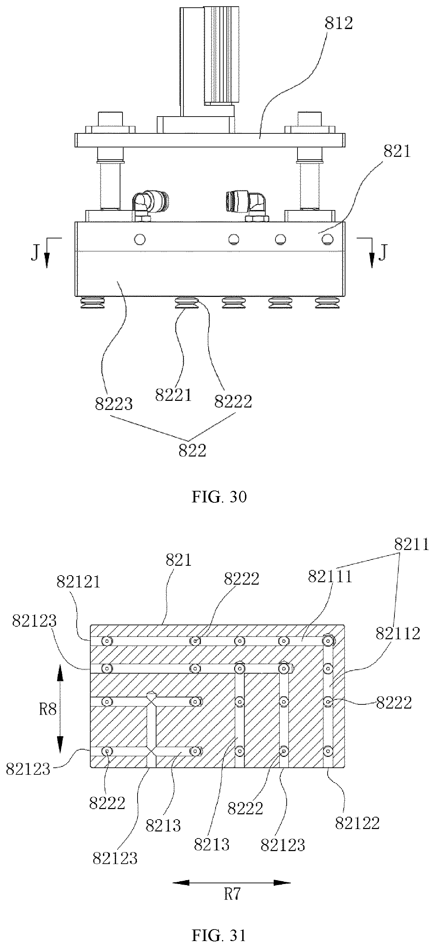

Referring to FIG. 31, the seventh direction of this embodiment of this disclosure is the direction indicated by arrow R7 in the figure.

Referring to FIG. 31, the eighth direction of this embodiment of this disclosure is the direction indicated by arrow R8 in the figure.

At present, the application of new energy batteries in life and industry is becoming more and more widespread. New energy batteries are widely used not only in energy storage power supply systems such as hydro, thermal, wind, and solar power plants, but also in electric transportation tools such as electric bicycles, electric motorcycles, electric vehicles, and fields such as aerospace. With continuous expansion of application fields of electric vehicle batteries, market demands for the electric vehicle batteries are also increasing.

As part of the inventive concept of this disclosure, before describing the embodiments of this disclosure, it is necessary to analyze the reasons why adhesive application devices in the related arts is difficult to be compatible with various different sizes, and obtain the technical solutions of the embodiments of this disclosure through reasonable analysis.

In the related arts, the material storage assembly is configured to store adhesive films, the adhesive films stored in the material storage assembly are picked up by the material picking assembly, the adhesive films stored in the material storage assembly need to be positioned so that the material picking assembly can accurately pick up the adhesive films stored in the material storage assembly, however, the structure for positioning the adhesive films stored in the material storage assembly is fixed, the corresponding positioning structure cannot move and is not adjustable, and cannot accurately position and store adhesive films of various different sizes in the material storage assembly, unable to adapt to the loading of adhesive films of various different sizes. The material preparation platform holds the adhesive films with the release papers removed, the application assembly picks up the adhesive films on the material preparation platform and applies them to the battery cells, the adhesive films stored on the material preparation platform need to be positioned so that the application assembly can accurately pick up the adhesive films on the material preparation platform and apply them to the battery cells, however, the structure for positioning the adhesive films on the material preparation platform is fixed, the corresponding positioning structure cannot move and is not adjustable, unable to adapt to the positioning and placement of adhesive films of various different sizes on the material preparation platform. Neither the first positioning assembly corresponding to the material storage assembly nor the second positioning assembly corresponding to the material preparation platform can adapt to adhesive films of various different sizes, making it difficult for the entire adhesive application device to be compatible with adhesive films of various different sizes, and difficult to apply adhesive films of different sizes to the battery cells.

The solutions of the embodiments of this disclosure can be applied, but are not limited to, adhesive films 100 applied to largest surfaces of battery cells, adhesive films 100 applied to smallest surfaces of battery cells, or adhesive films 100 applied to surfaces of other objects, as long as they are used for adhesive application on surfaces of objects. With the first positioning assembly 3 moved to store and position adhesive films 100 of different sizes in the material storage assembly 2, the adhesive films 100 of different sizes stored in the material storage assembly 2 can be accurately positioned, facilitating the material picking assembly 4 to pick up the adhesive films 100 in the material storage assembly 2. With the second positioning assembly 7 moved to place and position adhesive films 100 of different sizes on the material preparation platform 6, the adhesive films 100 of different sizes on the material preparation platform 6 can be placed and positioned, facilitating the application assembly 8 to pick up the adhesive films 100 on the material preparation platform 6. Therefore, the adhesive application device of this disclosure can better accommodate adhesive films 100 of different sizes for application.

A plurality of battery cells can be provided, and the plurality of battery cells may be connected in series, parallel, or series-parallel, where being connected in series-parallel means a combination of series and parallel connections of the plurality of battery cells. The plurality of battery cells may be directly connected in series, parallel, or series-parallel, and then an entirety of the plurality of battery cells is placed in the box. Certainly, multiple battery cells can first be connected in series, parallel, or series-parallel to form a battery module, and then multiple battery modules can be connected in series, parallel, or series-parallel to form an entirety, and the entirety formed by the multiple battery modules connected in series, parallel, or series-parallel is placed in the box. The battery pack may further include other structures. For example, the battery pack may further include a busbar configured to implement electrical connection between the multiple battery cells.

A battery cell refers to a basic unit that can realize the mutual conversion of chemical energy and electrical energy.

In the embodiments of this disclosure, the battery cell can be a secondary battery. A secondary battery refers to a battery cell that can continue to be used by activating an active material through charging after the battery cell is discharged.

In the embodiments of this disclosure, the battery cell can be a primary battery. A primary battery can be discharged, but a primary battery cannot be recharged for reuse.

In the embodiments of this disclosure, the battery cell can be a lithium-ion battery, a sodium-ion battery, a sodiumlithium ion battery, a lithium metal battery, a sodium metal battery, a lithium-sulfur battery, a magnesium-ion battery, a nickelhydrogen battery, a nickel-cadmium battery, a lead-acid battery, or the like. The embodiments of this disclosure are not limited thereto.

An adhesive film 100 can be adhered to a surface of the battery cell, and multiple battery cells adhered with adhesive films 100 can be bonded together to form a battery module. For example, the adhesive film 100 adhered to the battery cells can be a thermal pad.

It should be understood that the adhesive film 100 is not limited to thermal pads, and the adhesive film 100 can be adhesive structures of other types. For example, the adhesive film 100 may not have a thermal insulation or heat dissipation function, and the adhesive film 100 serves to bond two objects together.

Battery cells can be configured to make a battery module or battery pack, and a battery pack is configured to supply power to an electrical apparatus.

The electrical apparatus is an apparatus that uses electrical energy as an energy source to achieve corresponding functions by consuming electrical energy. For example, the electric apparatus may be, but is not limited to, a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

The electrical device of an embodiment of this disclosure is used as an example for description.

The vehicle provided by an embodiment of this disclosure may be an oil-fueled vehicle, a gas-powered vehicle, or a new energy vehicle. The new energy vehicle may be a battery electric vehicle, a hybrid electric vehicle, an extended-range electric vehicle, or the like. The vehicle is provided with a battery pack inside, where the battery pack may be disposed at the bottom, front or rear of the vehicle. The battery pack may be configured to power the vehicle. For example, the battery pack may be used as an operational power source for the vehicle. The vehicle may further include a controller and a motor, and the controller can be configured to control the battery pack to supply power to the motor. For example, the battery pack can be used for the starting, navigation, and driving power requirements of the vehicle.

In some embodiments of this disclosure, the battery pack can be used as not only the operational power source for the vehicle but also a driving power source for the vehicle, replacing all or part of the fossil fuel or the natural gas to provide driving power for the vehicle.

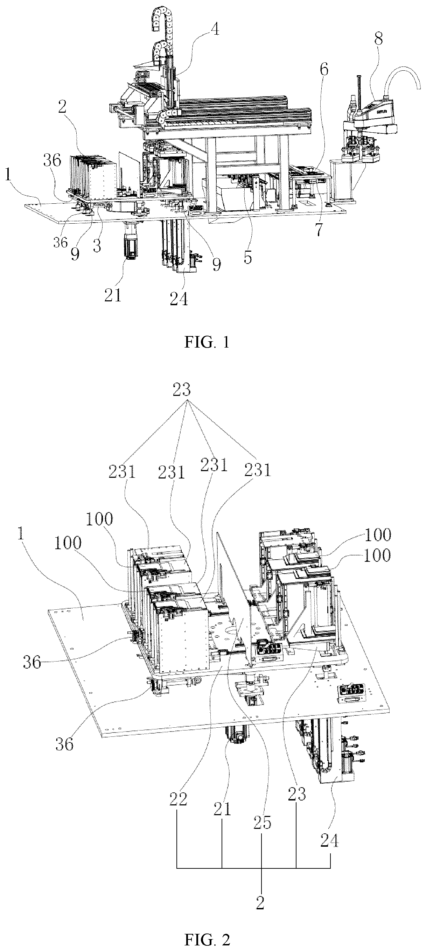

Referring to FIG. 1, an adhesive application device an embodiment of this disclosure includes a rack 1, a material storage assembly 2, a first positioning assembly 3, a material picking assembly 4, a release paper removal assembly 5, a material preparation platform 6, a second positioning assembly 7, and an application assembly 8. The material storage assembly 2 is disposed on the rack 1, and the material storage assembly 2 is configured to store adhesive films 100. The first positioning assembly 3 is disposed on the material storage assembly 2, and the first positioning assembly 3 is capable of at least partially moving together with the material storage assembly 2 to position the adhesive films 100 placed in the material storage assembly 2. The material picking assembly 4 is disposed on the rack 1, and the material picking assembly 4 has picking parts 41. The picking parts 41 are configured to pick up the adhesive films 100 placed in the material storage assembly 2, and an arrangement direction of the material picking assembly 4 and the rack 1 is a vertical direction. The release paper removal assembly 5 is disposed on the rack 1, and the release paper removal assembly 5 is configured to remove release papers 101 of the adhesive films 100 picked up by the picking parts 41. The material preparation platform 6 is connected to the rack 1, and the material preparation platform 6 is configured to bear the adhesive films 100 with the release papers 101 removed. The picking parts 41 can reciprocate between the material storage assembly 2, the release paper removal assembly 5, and the material preparation platform 6. The second positioning assembly 7 is disposed on the material preparation platform 6, and the second positioning assembly 7 is capable of at least partially moving together with the material preparation platform 6 to position the adhesive films 100 placed on the material preparation platform 6. The application assembly 8 is disposed on the rack 1, and the application assembly 8 is configured to pick up the adhesive film 100 on the material preparation platform 6 for application.

The rack 1 refers to a main structure of the adhesive application device used for support, and the rack 1 is configured to support other parts of the adhesive application device.

The material storage assembly 2 is configured to store the adhesive films 100, and the adhesive films 100 are loaded onto the material storage assembly 2, waiting to be picked up by the material picking assembly 4.

For example, the adhesive film 100 can be a thermal pad.

For example, the adhesive film 100 may not have a thermal insulation or heat dissipation function, and the adhesive film 100 serves to bond two objects together.

The first positioning assembly 3 is a structure used for positioning, and the first positioning assembly 3 is mainly configured to position the adhesive films 100 stored in the material storage assembly 2.

The material picking assembly 4 is configured to pick up and transfer the adhesive films 100, and the material picking assembly 4 transfers the picked adhesive films 100 to a corresponding position.

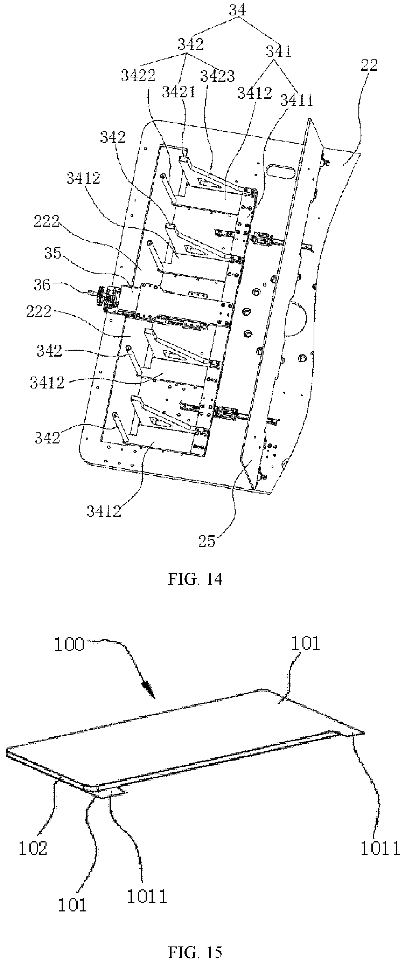

Referring to FIG. 15, the adhesive film 100 includes an adhesive film body 102 and a release paper 101 attached to an outer surface of the adhesive film body 102. The release paper 101 is mainly configured to isolate an adhesive object. For example, one or more surfaces of the adhesive film body 102 are adhesive, and the release paper 101 is attached to an adhesive surface of the adhesive film body 102 to prevent the adhesive film 100 from accidentally bonding to other objects. When the adhesive film body 102 needs to be adhered to a surface of an object under application, the release paper 101 is removed from the adhesive film 100, and the adhesive surface of the adhesive film body 102 exposed by removing the release paper 101 is adhered to a surface of the object under application.

For example, referring to FIG. 15, surfaces on two opposite sides of the adhesive film body 102 are adhesive. The release paper 101 to be attached to an adhesive surface is provided on each of the two opposite sides of the adhesive film body 102.

The release paper removal assembly 5 mainly realizes a paper removal function and is configured to remove the release papers 101 of the adhesive films 100. The release paper removal assembly 5 removes the release paper 101 on at least one surface of the adhesive film 100.

Referring to FIG. 1, the material preparation platform 6 is configured to bear the adhesive films 100 with the release papers 101 removed. The application assembly 8 is not convenient to directly pick up the adhesive films 100 from the material picking assembly 4. The material picking assembly 4 first places the adhesive films 100 with the release papers 101 removed on the material preparation platform 6, and then the application assembly 8 picks up the adhesive films 100 with the release papers 101 removed on the material preparation platform 6.

Referring to FIG. 1, the picking parts 41 can reciprocate between the material storage assembly 2, the release paper removal assembly 5, and the material preparation platform 6. The picking parts 41 are structures on the material picking assembly 4 for picking up the adhesive films 100. The picking parts 41 can reciprocate between the material storage assembly 2, the release paper removal assembly 5, and the material preparation platform 6, so that the picking parts 41 can drive the picked adhesive films 100 to move between the material storage assembly 2, the release paper removal assembly 5, and the material preparation platform 6.

For example, the picking parts 41 of the material picking assembly 4 pick up the adhesive films 100 in the material storage assembly 2. The picking parts 41 of the material picking assembly 4 drive the picked adhesive films 100 to move to the release paper removal assembly 5. The release paper removal assembly 5 removes the release papers 101 of the adhesive films 100 picked up by the picking parts 41. The picking parts 41 of the picking assembly drive the adhesive films 100 with the release papers 101 removed to move to the material preparation platform 6.

The second positioning assembly 7 is a structure used for positioning, and the second positioning assembly 7 is configured to position the adhesive films 100 with the release papers 101 removed on the material preparation platform 6.

The application assembly 8 is configured to pick up the adhesive films 100 on the material preparation platform 6 for application. The adhesive film 100 on the material preparation platform 6 has the release paper 101 on at least one surface removed. The application assembly 8 applies the adhesive films 100 with the release papers 101 removed on the material preparation platform 6 to surfaces of objects under application.

For example, the object under application can be a battery cell.

For example, the battery cell is a prismatic cell, and the surface of the object under application can be a largest surface of the battery cell.

It should be explained that the largest surface of the battery cell refers to outer surfaces on two sides of the battery cell in a thickness direction.

For example, the battery cell is a prismatic cell, and the surface of the object under application can be a smallest surface of the battery cell.

It should be explained that the largest surface of the battery cell refers to outer surfaces on two sides of the battery cell in a length direction.

It should be understood that the object under application is not limited to battery cells, and may be other objects that need adhering.

It should be understood that the battery cell is not limited to prismatic cells, and the battery cell can be of other shapes than a prismatic shape.

In the adhesive application device of this embodiment of this disclosure, since the first positioning assembly 3 is capable of at least partially moving together with the material storage assembly 2, the positioning position of the first positioning assembly 3 relative to the material storage assembly 2 changes, thereby enabling positioning of adhesive films 100 of different sizes in the material storage assembly 2. Adhesive films 100 of different sizes in the material storage assembly 2 can be accurately positioned by the first positioning assembly 3, facilitating the material picking assembly 4 to grab the adhesive films 100 in the material storage assembly 2. Since the second positioning assembly 7 is capable of at least partially moving together with the material preparation platform 6, the positioning position of the second positioning assembly 7 relative to the material preparation platform 6 changes, thereby enabling positioning of adhesive films 100 of different sizes on the material preparation platform 6. Adhesive films 100 of different sizes on the material preparation platform 6 can be accurately positioned by the second positioning assembly 7, facilitating the application assembly 8 to grab the adhesive films 100 on the material preparation platform 6. The material storage assembly 2 and the first positioning assembly 3 can be suitable for loading adhesive films 100 of different sizes. The material picking assembly 4 picks up the adhesive films 100 in the material storage assembly 2 and moves them to the release paper removal assembly 5 for paper removal operation. The material picking assembly 4 places the adhesive films 100 with the release papers 101 removed on the material preparation platform 6. The material preparation platform 6 and the second positioning assembly 7 can be suitable for placing adhesive films 100 of different sizes with the release papers 101 removed at accurate positions, so that the application assembly 8 picks up the adhesive films 100 on the material preparation platform 6 for application. Therefore, adhesive films 100 of different sizes can be loaded onto the adhesive application device and applied to objects under application through the adhesive application device, achieving compatibility of the adhesive application device with adhesive films 100 of various different sizes. Adapting to adhesive films 100 of various different sizes through movement and adjustment spares the need of replacing the hardware structure of the adhesive application device to fit adhesive films 100 of different sizes. In addition, the material storage assembly 2, the material picking assembly 4, the release paper removal assembly 5, the material preparation platform 6, and the application assembly 8 are all disposed on the rack. The first positioning assembly 3 is disposed on the material storage assembly 2. The second positioning assembly 7 is disposed on the material preparation platform 6. The overall structure of the adhesive application device is relatively compact, and therefore space utilization is high.

It should be understood that when adhesive films 100 are placed in the material storage assembly 2, the difference in sizes of the adhesive films 100 is mainly reflected in the difference in sizes of the adhesive films 100 in a direction intersecting the vertical direction.

For example, referring to FIGs. 2 to 4, FIG. 11, and FIG. 15, the shape of the adhesive film 100 is square. When adhesive films 100 are placed in the material storage assembly 2, a thickness direction of the adhesive films 100 is roughly disposed along the vertical direction, and a length direction and a width direction of the adhesive films 100 are both perpendicular to the vertical direction. A difference in sizes of the adhesive films 100 is mainly reflected in a difference in sizes of the adhesive films 100 in the length direction and the width direction.

For example, the adhesive application device of this embodiment of this disclosure can be compatible with a square adhesive film 100 in the following size range: the length of the square adhesive film 100 is 0-300 mm, and the width of the square adhesive film 100 is 0-180 mm.

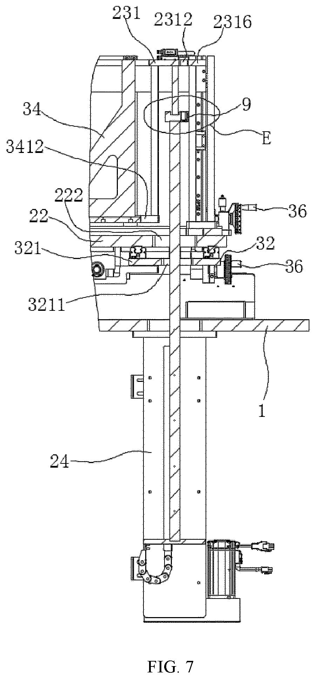

In an embodiment, referring to FIGs. 3 to 7, FIG. 9, and FIGs. 11 to 14, the first positioning assembly 3 includes first positioning components 31, second positioning components 32, a first driving apparatus 33, third positioning components 34, and a second driving apparatus 35. The first positioning components 31 are connected to the material storage assembly 2. The second positioning components 32 are movably disposed on the material storage assembly 2. The first driving apparatus 33 is installed on the material storage assembly 2, the first driving apparatus 33 drives the second positioning components 32 to move along the first direction, and the second positioning components 32 and the first positioning components 31 are configured to position the adhesive films 100 along the first direction. The third positioning component 34 is movably disposed on the material storage assembly 2. The second driving apparatus 35 is installed on the material storage assembly 2, the second driving apparatus 35 drives the third positioning components 34 to move along a second direction, the second direction intersects the first direction, the first direction and the second direction both intersect the vertical direction, and the third positioning components 34 and the first positioning components 31 are configured to position the adhesive films 100 along the second direction.

The first positioning component 31 is connected to the material storage assembly 2. Positions of the first positioning component 31 in the first direction and the second direction relative to the zone of the material storage assembly 2 for storing the adhesive films 100 barely change. Therefore, the first positioning component 31 can be used as a positioning reference for the adhesive films 100 in the material storage assembly 2, facilitating the material picking assembly 4 to accurately pick up the adhesive films 100.

For example, the length direction of the adhesive films 100 is disposed along the second direction, and the width direction of the adhesive films 100 is disposed along the first direction.

In this embodiment of this disclosure, the adhesive films 100 are positioned along the first direction by the second positioning components 32 and the first positioning components 31, and the adhesive films 100 are positioned along the second direction by the third positioning components 34 and the first positioning components 31. Since the first direction and the second direction both intersect the vertical direction, the adhesive films 100 can be positioned in the plane intersecting the vertical direction by the first positioning components 31, the second positioning components 32, and the third positioning components 34. The first driving apparatus 33 drives the second positioning components 32 to move along the first direction, thereby adapting to positioning of adhesive films 100 of different sizes in the first direction, and the second driving apparatus 35 drives the third positioning components 34 to move along the second direction, thereby adapting to positioning of adhesive films 100 of different sizes in the second direction. Therefore, with the second positioning component 32 and the third positioning component 34 moving in two different directions, adhesive films 100 of different sizes can be positioned in the plane intersecting the vertical direction, enabling adhesive films 100 of different sizes to be accurately positioned on the material storage assembly 2. This achieves positioning within the entire plane in fewer movement directions.

For example, referring to FIGs. 2 to 4 and FIG. 11, the first positioning component 31, the second positioning component 32, and the third positioning component 34 can accurately position adhesive films 100 of different sizes in the plane perpendicular to the vertical direction.

It should be understood that the embodiments of this disclosure are not limited to moving the second positioning component 32 and the third positioning component 34 in two directions respectively to achieve positioning of the adhesive films 100 in the plane intersecting the vertical direction.

For example, the first positioning component 31, the second positioning component 32, and the third positioning component 34 can all move together with the material storage assembly 2.

For example, one of the first positioning component 31, the second positioning component 32, and the third positioning component 34 moves, and the other two of the first positioning component 31, the second positioning component 32, and the third positioning component 34 remain stationary relative to the material storage assembly 2. This can adapt to positioning of adhesive films 100 of different sizes in one direction.

The material storage assembly 2 of this embodiment of this disclosure can have various structural forms.

In an embodiment, referring to FIG. 2 and FIG. 3, the material storage assembly 2 includes a first driver 21, a rotating platform 22, and main storages 23. The first driver 21 is installed on the rack 1. The rotating platform 22 is installed on the first driver 21, the first driver 21 drives the rotating platform 22 to rotate, a plane coinciding with the rotation centerline of the rotating platform 22 is a reference plane 221, the first positioning assembly 3 is provided on each of the two opposite sides of the reference plane 221, the first positioning component 31 is connected to the rotating platform 22, the second positioning component 32 and the third positioning component 34 are both movably disposed on the rotating platform 22, and the first driving apparatus 33 and the second driving apparatus 35 are both installed on the rotating platform 22, where one side of the two opposite sides of the reference plane 221 corresponding to the rotating platform 22 is a material loading side for loading the adhesive films 100, and the other side is a material picking side for picking the adhesive films 100. The main storages 23 are disposed on the rotating platform 22. The main storages 23 are provided on each of two opposite sides of the reference plane 221. Adhesive films 100 stored in the main storages 23 on each side are positioned by the corresponding first positioning assembly 3.

The first driver 21 is configured to provide power to the rotating platform 22 to drive the rotating platform 22 to rotate.

For example, the first driver 21 can be a motor.

For example, the first driver 21 can be a rotary cylinder.

The first positioning component 31 is connected to the rotating platform 22, the first positioning component 31 almost does not move relative to the rotating platform 22, and the first positioning component 31 serves as a positioning reference for adhesive films 100 stored in the main storage 23.

The second positioning component 32 and the third positioning component 34 move in two different directions relative to the rotating platform 22 respectively to adapt to adhesive films 100 of different sizes.

In this embodiment of this disclosure, the main storages 23 are provided on each of the two opposite sides of the reference plane 221. One side of the two opposite sides of the reference plane 221 is a material loading side, adhesive films 100 are loaded into main storages 23 on the material loading side. The other side of the two opposite sides of the reference plane 221 is a material picking side, and the material picking assembly 4 picks up the adhesive films 100 in main storages 23 on the material picking side. When the main storages 23 on the material picking side need to load the adhesive films 100, the first driver 21 drives the rotating platform 22 to rotate, so as to rotate the main storages 23 finishing material loading on the material loading side to the material picking side for picking, and rotate the main storages 23 requiring material loading on the material picking side to the material loading side for material loading. Through the rotation of the rotating platform 22, the picking and loading of the main storages 23 on the two sides do not affect each other, and the picking and loading can be operated in parallel, improving the working efficiency and production rhythm of the adhesive application device. The first positioning assembly 3 corresponding to the main storages 23 on each side can position adhesive films 100 of different sizes stored in the main storages 23 on the corresponding side, and the main storages 23 and the first positioning assembly 3 on each side are compatible with adhesive films 100 of different sizes on the corresponding side.

It should be understood that the material storage assembly 2 is not limited to the structure of the rotating platform 22. For example, the material storage assembly 2 may not include the rotating platform 22, and the loading position on the material storage assembly 2 can be used for picking.

In an embodiment, referring to FIGs. 2 to 4, FIG. 6, and FIG. 14, the material storage assembly 2 further includes a divider 25. A central plane in a width direction of the divider 25 coincides with the reference plane 221.

In this embodiment of this disclosure, the divider 25 separates the material storage assembly 2 on two sides of the reference plane 221, reducing the mutual interference between the material storage assembly 2 on the two sides of the reference plane 221.

In an embodiment, referring to FIG. 2 and FIG. 3, the main storage 23 on each side includes multiple material storage components 231 arranged sequentially along the first direction, and the material storage component 231 is configured to store adhesive films 100.

In this embodiment of this disclosure, the multiple material storage components 231 perform material loading in parallel, improving the material loading efficiency of the adhesive films 100. The multiple material storage components 231 are arranged sequentially along the first direction, facilitating the second positioning component 32 on each side to position adhesive films 100 on the material storage components 231 along the first direction.

For example, referring to FIG. 2, four material storage components 231 are arranged along the first direction.

It should be understood that adhesive films 100 are stored in the material storage component 231, and the material storage component 231 should bear entire adhesive film bodies 102 as much as possible, preventing the adhesive film body 102 from hanging out of the material storage component 231 as much as possible.

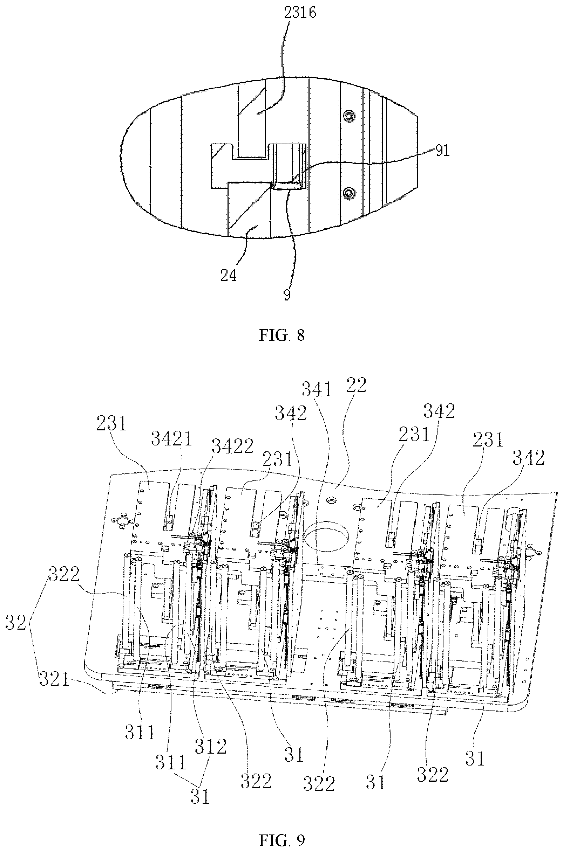

In an embodiment, referring to FIGs. 9 to 13, the material storage component 231 has a first avoidance zone 2311 extending along the first direction, and the second positioning component 32 includes a first mounting base 321 and a first positioning column 322. The projection zone of the first mounting base 321 along the vertical direction is a first shadow zone, a projection zone of the material storage components 231 along the vertical direction is a second shadow zone, the first shadow zone overlaps with multiple second shadow zones arranged along the first direction, the first mounting base 321 is disposed below the rotating platform 22, and the first driving apparatus 33 drives the first mounting base 321 to move along the first direction. The first positioning column 322 is connected above the first mounting base 321, the first positioning column 322 passes through the rotating platform 22, the first positioning column 322 is provided at a corresponding position of each material storage component 231, and the first positioning column 322 can move within the corresponding first avoidance zone 2311.

The first avoidance zone 2311 is the space for avoiding the first positioning column 322, and the first positioning column 322 moves within the first avoidance zone 2311 to reduce the possibility of interference between the first positioning column 322 and the material storage component 231.

The first shadow zone overlaps with multiple second shadow zones arranged along the first direction. The first mounting base 321 extends along the first direction to positions corresponding to the multiple material storage components 231. The first positioning column 322 is provided at a corresponding position of each material storage component 231. These first positioning columns 322 are all connected above the first mounting base 321. The first driving apparatus 33 drives the first mounting base 321 to move along the first direction. With the first mounting base 321 extending along the first direction to the positions corresponding to the multiple material storage components 231, the first positioning columns 322 at the positions corresponding to the material storage components 231 are driven to move together.

In this embodiment of this disclosure, the first mounting base 321 being disposed below the rotating platform 22 can reduce the possibility of interference between the material storage components 231 and the first mounting base 321 extending along the first direction to the positions corresponding to the multiple material storage components 231. Even in a case that the first shadow zone overlaps with multiple second shadow zones arranged along the first direction, the first mounting base 321 below the rotating platform 22 will not block the adhesive films 100 on the material storage components 231, facilitating the material picking assembly 4 to pick up the adhesive films 100 in the material storage components 231. Since the first direction and the second direction both intersect the vertical direction, if the first positioning column 322 side-positions adhesive films 100 on the material storage component 231 along the first direction, the first positioning column 322 needs to extend upward from the first mounting base 321 to a position above the material storage component 231. The first positioning column 322 moves within the first avoidance zone 2311, so that the first positioning column 322 can move along the first direction from the edge of the material storage component 231 to the middle part of the material storage component 231, so as to adapt to positioning of adhesive films 100 of different sizes along the first direction. With the first mounting base 321 extending along the first direction to the positions corresponding to the multiple material storage components 231, first positioning columns 322 at corresponding positions of the material storage components 231 are driven to move together. Positioning all material storage components 231 together along the first direction facilitates quick adjustment, so as to adapt to adhesive films 100 of different sizes along the first direction.

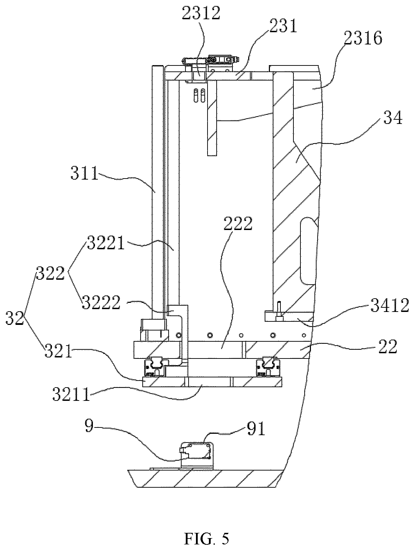

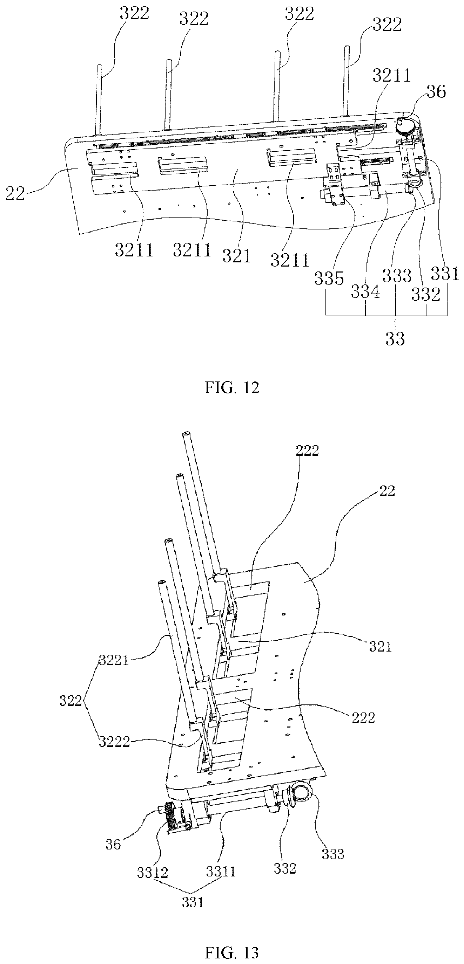

For example, referring to FIG. 5 and FIG. 13, the first positioning column 322 includes a column body 3221 and a substrate 3222, the substrate 3222 is connected above the first mounting base 321, the substrate 3222 passes through the rotating platform 22, and the column body 3221 is connected above the substrate 3222.

It should be understood that the embodiments of this disclosure are not limited to the first driving apparatus 33 driving the first mounting base 321 to move the first positioning columns 322 together. For example, each first positioning column 322 corresponds to one first mounting base 321 and one first driving apparatus 33, each first driving apparatus 33 drives the corresponding first mounting base 321 and first positioning column 322 to move, and all first positioning columns 322 move together to position the adhesive films 100.

It should be understood that when the adhesive film 100 stored in the material storage component 231 hangs out of the material storage component 231, the material storage component 231 may not be provided with the first avoidance zone 2311.

In an embodiment, referring to FIG. 1 and FIGs. 4 to 8, the adhesive application device further includes detectors 9, the first mounting base 321 has a first avoidance cavity 3211, the rotating platform 22 has second avoidance cavities 222, the material storage component 231 has a third avoidance cavity 2312, the detector 9 has a detection part 91 for generating a detection signal, the projection zone of the first avoidance cavity 3211, the projection zone of the second avoidance cavity 222, and the projection zone of the third avoidance cavity 2312 along the vertical direction are all covered by the projection zone of the detection part 91, the detection signal of the detection part 91 passes through the first avoidance cavity 3211, the second avoidance cavity 222, and the third avoidance cavity 2312, and when the rotating platform 22 rotates, the detector 9 is located below the first mounting base 321, and the detector 9 is detached from the rotating platform 22.

The detector 9 is configured to detect whether adhesive films 100 are stored in the material storage component 231. When adhesive films 100 are placed on the material storage component 231, the third avoidance zone 621 covers positions of the adhesive films 100 in the material storage component 231, and the detection signal of the detector 9 is blocked by the adhesive films 100 stored in the material storage component 231, thereby making the detector 9 determine that the adhesive films 100 are stored in the material storage component 231. When no adhesive films 100 are stored in the material storage component 231, the detection signal passing through the third avoidance zone 621 will not be blocked by adhesive films 100, thereby making the detector 9 determine that no adhesive films 100 are stored in the material storage component 231.

For example, the detector 9 is a photoelectric sensor, and the detection signal emitted by the detection part 91 is an optical signal. When the optical signal emitted by the detector 9 passes through the third avoidance zone 621 and is blocked by an adhesive film 100, the optical signal is reflected back to the detector 9 and received by the detector 9, thereby determining that adhesive films 100 are stored in the material storage component 231. When the optical signal emitted by the detector 9 passes through the third avoidance zone 621 and is not blocked, the detector 9 does not receive the reflected optical signal, thereby determining that there are no adhesive films 100 in the material storage component 231.

In this embodiment of this disclosure, the detector 9 is located below the first mounting base 321, and therefore the detector 9 almost does not block the adhesive films 100 in the material storage component 231. This reduces the possibility of interference between the detector 9 and the material picking assembly 4, facilitating the material picking assembly 4 to pick up the adhesive films 100. The detector 9 is located below the first mounting base 321 and is detached from the rotating platform 22. The detector 9 does not rotate with the rotating platform 22, reducing the risk of the signal line of the detector 9 getting tangled. Since a projection zone of the first avoidance cavity 3211, a projection zone of the second avoidance cavity 222, and a projection zone of the third avoidance cavity 2312 are all covered by a projection zone of the detection part 91, the detection signal emitted by the detection part 91 can pass through the first avoidance cavity 3211 of the first mounting base 321, the second avoidance cavity 222 of the rotating platform 22, and the third avoidance cavity 2312 of the material storage component 231 to reach the zone for storing the adhesive film 100 in the material storage component 231, thereby detecting whether adhesive films 100 are stored in the material storage component 231.

In an embodiment, referring to FIG. 1 and FIGs. 4 to 8, the detectors 9 are provided on two opposite sides of the reference plane 221. Detectors 9 corresponding to main storages 23 on the material loading side of the main storages 23 on the two sides are connected to the rack 1. The material storage component 231 has a bearing plane 2313 for bearing the adhesive films 100. The material storage assembly 2 further includes lifting apparatuses 24 disposed on the rack 1. The lifting apparatuses 24 are located at positions corresponding to main storages 23 on the material picking side of the main storages 23 on the two sides. The lifting apparatus 24 is configured to drive the material storage component 231 on the material picking side to at least partially move to lift the bearing plane 2313. The detector 9 corresponding to the main storage 23 on the material picking side is installed on the lifting apparatus 24. The lifting apparatus 24 drives the detector 9 to lift, and when the lifting apparatus 24 descends to the lowest position, the lifting apparatus 24 and the corresponding detector 9 are both located below the first mounting base 321.

The bearing plane 2313 of the material storage component 231 can be lifted. The bearing plane 2313 of the material storage component 231 on the material loading side is roughly at a lowest position where the bearing plane 2313 can descend. Multiple adhesive films 100 are sequentially stacked on the bearing plane 2313 in the vertical direction to complete material loading. The material storage component 231 finishing material loading is rotated to the material picking side by the rotating platform 22. Each time the picking part 41 of the material picking assembly 4 picks up one adhesive film 100, the bearing plane 2313 of the corresponding material storage component 231 is lifted by the lifting apparatus 24 by roughly the distance of one adhesive film 100, so that the material picking assembly 4 can continue to pick up adhesive films 100 at roughly the same position.

For example, the lifting apparatus 24 can be a cylinder or an electric push rod.

In this embodiment of this disclosure, the detector 9 connected to the rack 1 almost does not move relative to the rack 1, and therefore shaking of a signal line of the detector 9 is small. This helps reduce the wear of the signal line and interference between the signal line and other components. When the lifting apparatus 24 descends to the lowest position, the lifting apparatus 24 and the detector 9 are both located below the first mounting base 321. In this case, the detection signal of the detector 9 can pass through the first avoidance cavity 3211, the second avoidance cavity 222, and the third avoidance cavity 2312 to detect the adhesive film 100, and the lifting part of the lifting apparatus 24 can pass through the first avoidance cavity 3211 and the second avoidance cavity 222 to come into contact with the material storage component 231 to lift the bearing plane 2313. With the detector 9 installed on the lifting apparatus 24, and with the first avoidance cavity 3211 and the second avoidance cavity 222 that avoid the detection signal of the detector 9 used to avoid the lifting part of the lifting apparatus 24, no space needs to be provided by removing material on the first mounting base 321 and the rotating platform 22 to avoid the lifting apparatus 24. This helps simplify the structure of the first mounting base 321 and the rotating platform 22 and increase the bearing strength of the first mounting base 321 and the rotating platform 22.

For example, referring to FIGs. 2, 4, 6, and 7, each material storage component 231 is provided with a corresponding lifting apparatus 24.

It should be understood that the position arrangement of the detector 9 in this embodiment of this disclosure is not limited to the above positions. For example, the detectors 9 on the two sides are all connected to the rack 1. For example, the detectors 9 can be disposed on the rotating platform 22.

In an embodiment, referring to FIGs. 9 to 11 and FIG. 14, the material storage component 231 has a second avoidance zone 2314, and the third positioning component 34 includes a second mounting base 341 and a positioning column device set 342. The second mounting base 341 is disposed on the rotating platform 22, and the second driving apparatus 35 drives the second mounting base 341 to move along the second direction. The positioning column device set 342 is connected above the second mounting base 341, the positioning column device set 342 is disposed at a corresponding position of each material storage component 231, and the positioning column device set 342 is capable of moving within the corresponding second avoidance zone 2314.

The second avoidance zone 2314 is a space for avoiding the positioning column device set 342, and the positioning column device set 342 moves within the second avoidance zone 2314 to reduce the possibility of interference between the positioning column device set 342 and the material storage component 231 during the movement.

The second mounting base 341 extends along the first direction to positions corresponding to the multiple material storage components 231, and the positioning column device set 342 is provided at a corresponding position of each material storage component 231. The second driving apparatus 35 drives the second mounting base 341 to move along the second direction. With the second mounting base 341 extending along the first direction to the positions corresponding to the multiple material storage components 231, the positioning column device sets 342 at positions corresponding to the material storage components 231 are driven to move together along the second direction.

In this embodiment of this disclosure, since the first direction and the second direction both intersect the vertical direction, if the positioning column device set 342 positions the adhesive films 100 on the material storage component 231 at least along the second direction side, the positioning column device set 342 needs to extend upward from the second mounting base 341 to a position above the material storage component 231. The positioning column device set 342 moves within the second avoidance zone 2314, so that the positioning column device set 342 can move along the second direction from the edge of the material storage component 231 to the middle part of the material storage component 231 to adapt to positioning of adhesive films 100 of different sizes along the second direction. With the second mounting base 341 extending along the first direction to the positions corresponding to the multiple material storage components 231, the positioning column device sets 342 at corresponding positions of the material storage components 231 are driven to move together, so that the material storage components 231 are positioned together along the second direction, facilitating quick adjustment to adapt to adhesive films 100 of different sizes along the second direction.

It should be understood that when the adhesive film 100 stored in the material storage component 231 hangs out of the material storage component 231, the material storage component 231 may not be provided with the second avoidance zone 2314.

It should be understood that each positioning column device set 342 is made to correspond to one second mounting base 341 and one second driving apparatus 35. Each second driving apparatus 35 drives the corresponding second mounting base 341 and the positioning column device set 342 to move. Each positioning column device set 342 moves separately along the second direction to position the adhesive films 100.

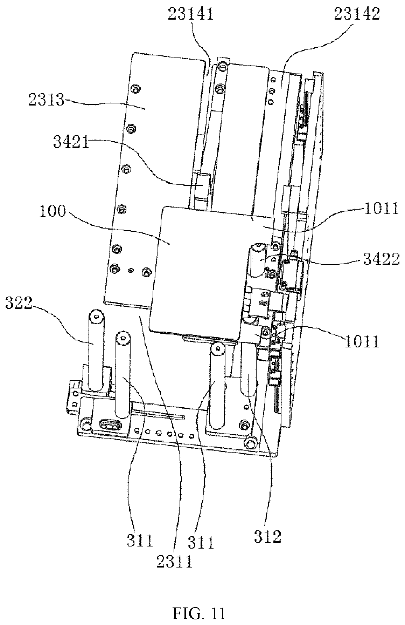

In an embodiment, referring to FIG. 11 and FIG. 15, the release paper 101 of the adhesive film 100 has ears 1011 hanging out of the adhesive film body 102.

In this embodiment of this disclosure, the hanging-out ears 1011 facilitate the release paper removal assembly 5 to clamp the release paper 101, and the release paper removal assembly 5 removes the release paper 101 from the adhesive film body 102 by clamping the overhanging ears 1011 of the release paper 101.

In an embodiment, referring to FIG. 11 and FIG. 15, the ears 1011 on the two opposite sides of the adhesive film body 102 are spaced apart in a projection zone along the thickness direction of the adhesive film body 102.

For example, referring to FIG. 11 and FIG. 15, the projection zones formed by the projection of the ears 1011 on two sides in the thickness direction of the adhesive film body 102 are spaced apart along the length direction of the adhesive film body 102.

For example, referring to FIG. 3 and FIG. 11, when the adhesive films 100 are placed on the material storage component 231, ears 1011 on two sides are spaced apart along the second direction.

In an embodiment, referring to FIGs. 9 to 11 and FIG. 14, the material storage component 231 has a bearing plane 2313 for bearing the adhesive films 100, the second avoidance zone 2314 includes a first sub-zone 23141 and a second sub-zone 23142, both the first sub-zone 23141 and the second sub-zone 23142 extend along the second direction, the first sub-zone 23141 is located on the side of the second sub-zone 23142 facing towards the corresponding bearing plane 2313 along the first direction, and the positioning column device set 342 includes a second positioning column 3421 and a third positioning column 3422. The second positioning column 3421 is connected above the second mounting base 341. The second positioning column 3421 is provided at a corresponding position of each material storage component 231. The second positioning column 3421 can move within the first sub-zone 23141. The third positioning column 3422 is connected above the second mounting base 341. The third positioning column 3422 is provided at a corresponding position of each material storage component 231. The third positioning column 3422 can move within the second sub-zone 23142. The third positioning column 3422 is located on a side of the second positioning column 3421 facing away from the reference plane 221 along the second direction.

The first sub-zone 23141 is located on a side of the second sub-zone 23142 facing towards the corresponding bearing plane 2313 along the first direction. The second sub-zone 23142 is closer to the edge of the material storage component 231 along the first direction than the first sub-zone 23141. Correspondingly, the second sub-zone 23142 is closer to the edge of the adhesive films 100 stored in the material storage component 231 along the first direction than the first sub-zone 23141.

In this embodiment of this disclosure, the second positioning column 3421 can move within the first sub-zone 23141. The third positioning column 3422 can move within the second sub-zone 23142. The third positioning column 3422 is located on a side of the second positioning column 3421 facing away from the reference plane 221 along the second direction. The second positioning column 3421 is located at the edge of the adhesive films 100 stored in the material storage component 231 along the second direction. The moving second positioning column 3421 can side-position adhesive films 100 of different sizes along the second direction. The second positioning column 3421 positions the adhesive films 100 through abutting along the second direction. The second positioning column 3421 moves within the first sub-zone 23141. The second positioning column 3421 can move from the edge of the material storage component 231 along the second direction to the middle part of the material storage component 231 to adapt to positioning of adhesive films 100 of different sizes along the second direction. The third positioning column 3422 is located at the edge of the adhesive films 100 stored in the material storage component 231 along the first direction. The third positioning column 3422 positions the adhesive films 100 through abutting along the first direction. The third positioning column 3422 is located between ears 1011 on two sides of the adhesive films 100 stored in the material storage component 231, and the third positioning column 3422 moves along the second direction to adapt to adhesive films 100 of different sizes with ears 1011 spaced along the second direction. With the second positioning column 3421 avoided by the first sub-zone 23141, the possibility of interference between the second positioning column 3421 and the material storage component 231 can be reduced. With the third positioning column 3422 avoided by the second sub-zone 23142, the possibility of interference between the third positioning column 3422 and the material storage component 231 can be reduced.

The structure of the positioning column device set 342 in this embodiment of this disclosure is not limited. For example, the positioning column device set 342 may not include the third positioning column 3422.

In an embodiment, referring to FIG. 3, FIG. 10, FIG. 11, and FIG. 14, a length direction of the bearing plane 2313 is disposed along the second direction, and the second positioning column 3421 is plate-shaped.

The length direction of the bearing plane 2313 is disposed along the second direction, the length direction of the adhesive films 100 placed on the bearing plane 2313 is arranged along the second direction, and adhesive films 100 of different sizes have significantly varying sizes in the length direction of the adhesive films 100.

In this embodiment of this disclosure, the second positioning column 3421 is plate-shaped, and the second positioning column 3421 is in surface contact with the adhesive films 100 along the second direction. The second positioning column 3421 can stably move the adhesive films 100 for a long distance along the second direction to position the adhesive films 100 to the corresponding position, thereby reducing the possibility of the adhesive films 100 being pushed askew by the second positioning column 3421 in a positioning process of the adhesive films 100 being pushed by the second positioning column 3421.

The shape of the second positioning column 3421 in this embodiment of this disclosure is not limited. For example, the second positioning column 3421 can be cylindrical.

The first positioning column 322 and the third positioning column 3422 in this embodiment of this disclosure can both be cylindrical.

In an embodiment, referring to FIG. 14, the positioning column device set 342 further includes a reinforcing rib 3423, the reinforcing rib 3423 is connected to the second mounting base 341 and the plate-shaped second positioning column 3421 respectively, and the reinforcing rib 3423 is located on the side of the second positioning column 3421 facing towards the reference plane 221 along the second direction.

Multiple adhesive films 100 stacked sequentially in the vertical direction are stored on the bearing plane 2313 of each material storage component 231, and the multiple adhesive films 100 stacked sequentially in the vertical direction need to be positioned through abutting along the second direction by the second positioning column 3421. Therefore, the second positioning column 3421 extends upward from the second mounting base 341 to a large height. The thickness of the plate-shaped second positioning column 3421 is relatively small to reduce the weight of the second positioning column 3421.

In this embodiment of this disclosure, the reinforcing rib 3423 is connected to the second mounting base 341 and the plate-shaped second positioning column 3421 respectively, so that the strength of the thin and high second positioning column 3421 is enhanced, the deformation resistance of the second positioning column 3421 is increased, and the flexural deformation of the second positioning column 3421 can be reduced during the process of the second positioning column 3421 pushing the adhesive films 100 along the second direction, facilitating the second positioning column 3421 to accurately position the adhesive films 100 along the second direction.

The structure of the positioning column device set 342 in this embodiment of this disclosure is not limited. For example, the positioning column device set 342 may not include the reinforcing rib 3423.

In an embodiment, referring to FIG. 14, the second positioning column 3421 is located between the reference plane 221 and the first positioning component 31 along the second direction, and the reinforcing rib 3423 is located on the side of the second positioning column 3421 facing towards the reference plane 221 along the second direction.

The second positioning column 3421 is located between the reference plane 221 and the first positioning component 31 along the second direction. When the adhesive films 100 are stored in the material storage component 231, the second positioning column 3421 is located between the adhesive films 100 and the reference plane 221 along the second direction, the second positioning column 3421 positions the adhesive films 100 through abutting along the second direction, and a direction of a reactive force of the adhesive films 100 on the second positioning column 3421 points from the second positioning column 3421 to the reference plane 221.

In this embodiment of this disclosure, the reinforcing rib 3423 is located on the side of the second positioning column 3421 facing towards the reference plane 221 along the second direction, the supporting force of the reinforcing rib 3423 on the second positioning column 3421 is opposite to the direction of the reactive force of the adhesive films 100 on the second positioning column 3421, facilitating the reinforcing rib 3423 to better support the second positioning column 3421 and enhancing the deformation resistance of the second positioning column 3421.

The position of the reinforcing rib 3423 in this embodiment of this disclosure is not limited. For example, the reinforcing rib 3423 can be located on the side of the second positioning column 3421 facing away from the reference plane 221 along the second direction.

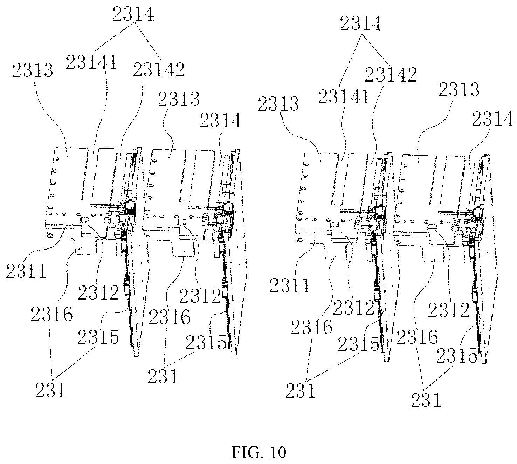

In an embodiment, referring to FIG. 10, the material storage component 231 includes a guide mechanism 2315 and a support mechanism 2316 disposed on the guide mechanism 2315. The support mechanism 2316 is configured to store the adhesive films 100. The guide mechanism 2315 guides the support mechanism 2316 to move along the vertical direction. The arrangement direction of the guide mechanism 2315 and the support mechanism 2316 intersects the vertical direction.

The support mechanism 2316 is configured to store the adhesive films 100, and the support mechanism 2316 serves to bear the adhesive films 100.

For example, referring to FIG. 10, the bearing plane 2313 is formed on the support mechanism 2316.

The arrangement direction of the guide mechanism 2315 and the support mechanism 2316 intersects the vertical direction, in the direction intersecting the vertical direction, the guide mechanism 2315 is located on one side of the support mechanism 2316, and the bottom of the support mechanism 2316 is suspended.

In this embodiment of this disclosure, the guide mechanism 2315 guides the support mechanism 2316 to move along the vertical direction, the support mechanism 2316 moves down, and multiple adhesive films 100 are sequentially stacked on the support mechanism 2316 in the vertical direction to complete loading of the adhesive films 100. In a material picking process, each time the material picking assembly 4 picks up one adhesive film 100, the guide mechanism 2315 guides the support mechanism 2316 to move up by roughly distance of one adhesive film 100, so that an uppermost adhesive film 100 stored on the support mechanism 2316 is as close as possible to a position where it can be picked up by the picking part 41 of the material picking assembly 4, facilitating the material picking assembly 4 to pick up the adhesive film 100. The arrangement direction of the guide mechanism 2315 and the support mechanism 2316 intersects the vertical direction, the bottom of the support mechanism 2316 is suspended, and during the downward movement of the support mechanism 2316, the adhesive films 100 stored on the support mechanism 2316 will not interfere with the guide mechanism 2315, and the adhesive films 100 stored on the support mechanism 2316 will not be lifted by the guide mechanism 2315.

For example, referring to FIGs. 2, 4, 6, and 7, each lifting apparatus 24 is located below the corresponding support mechanism 2316.

In an embodiment, referring to FIGs. 3 to 5, FIG. 7, FIG. 10, and FIG. 14, the second avoidance zone 2314 is formed in the support mechanism 2316, and the second mounting base 341 includes a common base 3411 and a base 3412. The common base 3411 extends along the first direction to the positions corresponding to the multiple support mechanisms 2316, the common base 3411 is disposed on the rotating platform 22, the common base 3411 is located on the side of the guide mechanism 2315 facing towards the reference plane 221 along the second direction, and the second driving apparatus 35 drives the common base 3411 to move along the second direction. The base 3412 is connected to the common base 3411, the base 3412 is located on the side of the common base 3411 facing away from the reference plane 221 along the second direction, the base 3412 is provided at a position corresponding to each support mechanism 2316, the positioning column device set 342 is connected above the base 3412, and the base 3412 can move below the support mechanism 2316 along the second direction.

The multiple material storage components 231 on each side are arranged along the first direction. Correspondingly, multiple support mechanisms 2316 on each side are arranged along the first direction. Correspondingly, multiple guide mechanisms 2315 on each side are arranged along the first direction.

The base 3412 is provided at a position corresponding to each support mechanism 2316. Correspondingly, multiple bases 3412 on each side are arranged along the first direction.

The common base 3411 extends along the first direction to the positions corresponding to the multiple support mechanisms 2316, and the bases 3412 at the positions corresponding to the support mechanisms 2316 are all connected to the common base 3411. The common base 3411 extending along the first direction to the positions corresponding to the multiple support mechanisms 2316 drives the multiple bases 3412 arranged along the first direction to move together.

In this embodiment of this disclosure, the common base 3411 is located on a side of the guide mechanism 2315 facing towards the reference plane 221 along the second direction. This reduces the possibility of interference between the material storage component 231 and the common base 3411 extending along the first direction to positions corresponding to the multiple support mechanisms 2316. The base 3412 is provided at a position corresponding to each support mechanism 2316. When a positioning column device moves within the second avoidance zone 2314, the base 3412 can move below the support mechanism 2316 along the second direction, thereby alleviating the extent to which the positioning column device set 342 hangs out of the base 3412 as much as possible. This increases deformation resistance of the positioning column device set 342, facilitating the positioning column device set 342 to accurately position the adhesive films 100 along the second direction. The second driving apparatus 35 drives the common base 3411 to move along the second direction, so that the common base 3411 extending along the first direction to positions corresponding to the multiple support mechanisms 2316 drives the multiple bases 3412 and the positioning column device sets 342 connected to the bases 3412 to move together. The positioning column device sets 342 corresponding to the multiple support mechanisms 2316 respectively position adhesive films 100 on the support mechanisms 2316 together along the second direction. This improves positioning efficiency.

The structure of the second mounting base 341 in this embodiment of this disclosure is not limited. For example, the second mounting base 341 may not include the base 3412.

In an embodiment, referring to FIG. 3 and FIG. 10, the guide mechanism 2315 and the support mechanism 2316 are arranged along the first direction, and a length direction of the support mechanism 2316 is disposed along the second direction.

In this embodiment of this disclosure, the length direction of the support mechanism 2316 is arranged along the second direction. The guide mechanism 2315 arranged along the first direction with the support mechanism 2316 is roughly on the long side of the support mechanism 2316. A large span of the guide mechanism 2315 along the second direction can be set, facilitating the guide mechanism 2315 to more stably guide the support mechanism 2316 along the vertical direction. The guide mechanism 2315 and the support mechanism 2316 are arranged along the first direction, so that the guide mechanism 2315 can separate two adjacent support mechanisms 2316 in the first direction, thereby reducing interference between the two adjacent support mechanisms 2316 in the first direction.

The arrangement direction of the guide mechanism 2315 and the support mechanism 2316 in this embodiment of this disclosure can be set according to actual needs and is not limited to the first direction.

The length direction of the support mechanism 2316 in this embodiment of this disclosure can be disposed according to actual needs and is not limited to the second direction.

In an embodiment, referring to FIGs. 4 to 7 and FIG. 14, the second mounting base 341 is located above the rotating platform 22.

In this embodiment of this disclosure, since the second mounting base 341 moves along the second direction, the possibility of interference between the second mounting base 341 above the rotating platform 22 and the multiple material storage components 231 arranged along the first direction is lower. The second mounting base 341 is located above the rotating platform 22, and the rotating platform 22 does not need to open a structure to avoide the positioning column device set 342 by removing material, which helps simplify the structure of the rotating platform 22 and increase the strength of the rotating platform 22.

The second mounting base 341 in this embodiment of this disclosure can be located below the rotating platform 22.

In an embodiment, referring to FIGs. 4 to 7 and FIG. 13 and FIG. 14, the first mounting base 321 is located below the rotating platform 22, and the second mounting base 341 is located above the rotating platform 22.

In this embodiment of this disclosure, the first mounting base 321 and the second mounting base 341 are located on two sides of the rotating platform 22 along the vertical direction, reducing the possibility of interference between the moving first mounting base 321 and the second mounting base 341.

In an embodiment, referring to FIG. 2, FIG. 3, FIG. 6, FIG. 7, FIG. 12, and FIG. 13, the first positioning assembly 3 has operation parts 36 for manual operation to provide power, and the first driving apparatus 33 and the second driving apparatus 35 both have the operation part 36.

In this embodiment of this disclosure, the first driving apparatus 33 and the second driving apparatus 35 both have the operation part 36 for manual operation, and the operator operates the corresponding operation part 36 to provide power to the first driving apparatus 33 and the second driving apparatus 35. With power provided to the first driving apparatus 33 and the second driving apparatus 35 through manual operation, there is no need to supply power to the first driving apparatus 33 and the second driving apparatus 35 installed on the rotating platform 22, reducing the risk of the power supply wires getting tangled during the rotation of the rotating platform 22.

In an embodiment, referring to FIG. 2, FIG. 3, FIG. 6, FIG. 7, FIG. 12, and FIG. 13, the operation part 36 is located on a side that is of main storages 23 on each side and that faces away the reference plane 221 along an arrangement direction of the main storages 23 on the two sides.

In this embodiment of this disclosure, the operation part 36 faces away the reference plane 221. That is, the operation part 36 faces away the middle position of the rotating platform 22 and is close to the edge of the rotating platform 22. This facilitats an operator to manually operate the operation part 36.

The position of the operation part 36 in this embodiment of this disclosure is not limited. For example, the operation part 36 can be disposed on a side of the main storage 23 along the first direction.

In an embodiment, referring to FIG. 12 and FIG. 13, main storages 23 are provided on each of two opposite sides of the reference plane 221 along the second direction. The first driving apparatus 33 includes a rotating shaft 331, a first bevel gear 332, a second bevel gear 333, a lead screw 334, and a connecting apparatus 335. An axial direction of the rotating shaft 331 is disposed along the second direction, and the rotating shaft 331 has a corresponding operation part 36. The first bevel gear 332 is connected to the end of the rotating shaft 331 facing towards the reference plane 221, so that the first bevel gear 332 rotates with the rotating shaft 331. The second bevel gear 333 meshes with the first bevel gear 332. The lead screw 334 is rotatably connected to the rotating platform 22, the second bevel gear 333 is connected to one end of the lead screw 334, so that the second bevel gear 333 rotates with the lead screw 334, and an axial direction of the lead screw 334 is disposed along the first direction. The connecting apparatus 335 is threadedly connected to the lead screw 334 so that the lead screw 334 drives the connecting apparatus 335 to move along the first direction. The connecting apparatus 335 is installed on the second positioning component 32.

The central axes of the first bevel gear 332 and the second bevel gear 333 meshing with each other intersect, and are used to transmit motion between non-parallel axes.

For example, the central axes of the first bevel gear 332 and the second bevel gear 333 meshing with each other are perpendicular to each other.

In this embodiment of this disclosure, the central axes of the first bevel gear 332 and the second bevel gear 333 meshing with each other intersect, the operator can conveniently drive the rotating shaft 331 to rotate through the operation part 36 facing away from the reference plane 221 along the second direction, and the first bevel gear 332 and the second bevel gear 333 change the direction of the rotation centerline, so that the rotation centerline of the lead screw 334 is disposed along the first direction, that is, the axial direction of the lead screw 334 is disposed along the first direction, and the rotation of the lead screw 334 drives the connecting apparatus 335 and the second positioning component 32 to move along the first direction. Therefore, the rotating shaft can be conveniently driven to rotate through the operation part 36, thereby driving the second positioning component 32 to move along the first direction to position the adhesive films 100.

In an embodiment, referring to FIG. 13, the rotating shaft 331 includes a shaft body 3311 and a handle 3312 connected to each other, an axial direction of the shaft body 3311 is disposed along the second direction, the handle 3312 is connected to the end of the rotating shaft 331 facing away from the reference plane 221, and the handle 3312 forms a corresponding operation part 36.

The handle 3312 in this embodiment of this disclosure facilitates manual operation by the operator.

In an embodiment, referring to FIG. 9 and FIG. 11, the first positioning component 31 includes a fourth positioning column 311 and a fifth positioning column 312, the fourth positioning column 311 is located on a side of the material storage component 231 along the second direction, and the fifth positioning column 312 is located on a side of the material storage component 231 along the first direction.

For example, the shapes of the fourth positioning column and the fifth positioning column 312 are both cylindrical.

In this embodiment of this disclosure, the fourth positioning column 311 and the third positioning component 34 position at least along the second direction, and the fifth positioning column 312 and the second positioning component 32 position along the first direction, thereby adapting to positioning of adhesive films 100 of different sizes from different directions.

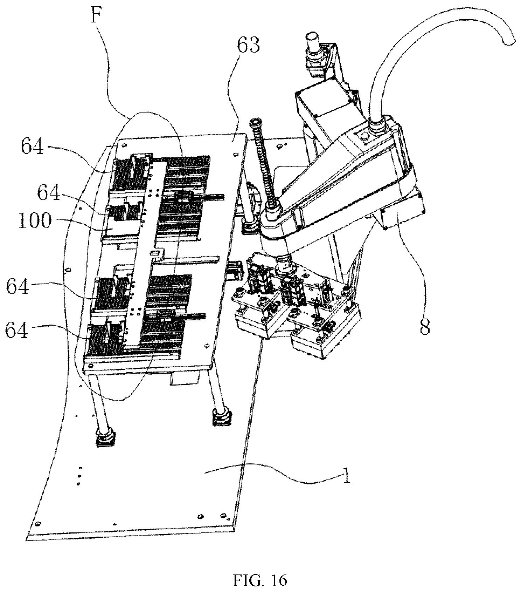

In an embodiment, referring to FIGs. 16 to 22, the material preparation platform 6 is formed with reference positioning parts 61, and the second positioning assembly 7 includes a fourth positioning component 71, a third driving apparatus 72, a fifth positioning component 73, and a fourth driving apparatus 74. The fourth positioning component 71 is movably disposed on the material preparation platform 6. The third driving apparatus 72 is installed on the material preparation platform 6, the third driving apparatus 72 drives the fourth positioning component 71 to move along the third direction, and the fourth positioning component 71 and the reference positioning part 61 are configured to position the adhesive films 100 along the third direction. The fifth positioning component 73 is movably disposed on the material preparation platform 6. The fourth driving apparatus 74 is installed on the material preparation platform 6, the fourth driving apparatus 74 drives the fifth positioning component 73 to move along the fourth direction, the fourth direction intersects the third direction, the third direction and the fourth direction both intersect the vertical direction, and the fifth positioning component 73 and the reference positioning part 61 are configured to position the adhesive films 100 along the fourth direction.

The fourth positioning component 71 and the reference positioning part 61 are configured to position the adhesive films 100 along the third direction, the fifth positioning component 73 and the reference positioning part 61 are configured to position the adhesive films 100 along the fourth direction, and the reference positioning part 61 spans the material preparation platform 6 along one side of the third direction and the material preparation platform 6 along one side of the fourth direction.

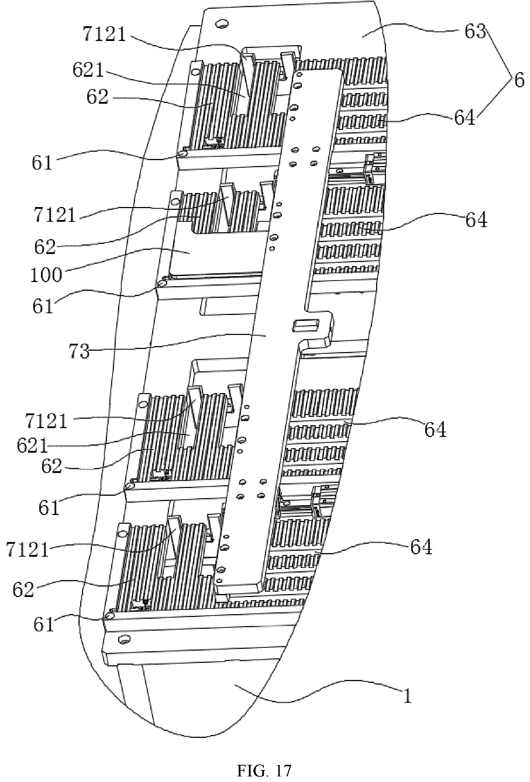

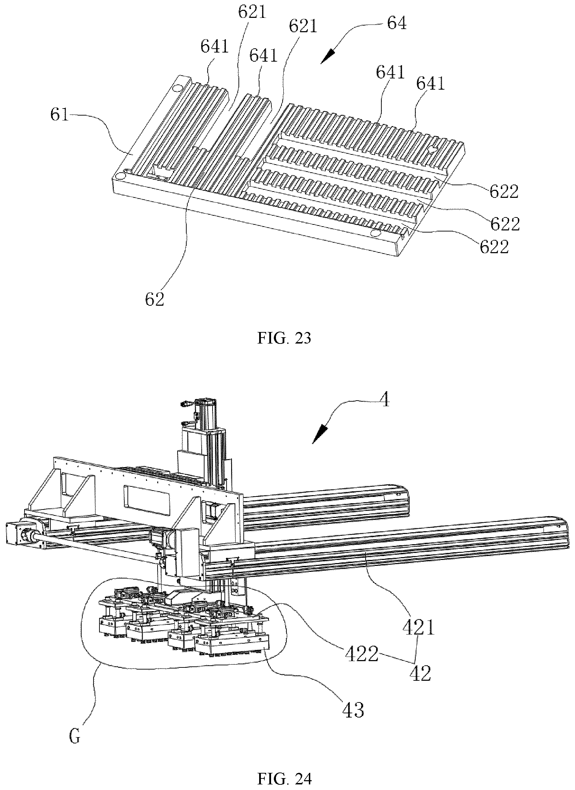

For example, referring to FIG. 17 and FIG. 23, the reference positioning part 61 is L-shaped.

For example, the third driving apparatus 72 includes a second driver 721 installed on the material preparation platform 6 and a first transmission mechanism 722, the fourth positioning component 71 is disposed on the first transmission mechanism 722, and the second driver 721 drives the first transmission mechanism 722 to move to drive the fourth positioning component 71 to move along the third direction.

For example, the second driver 721 can be a motor or a rotary cylinder.

For example, the first transmission mechanism 722 can be a lead screw pair mechanism.

The lead screw pair mechanism is configured to convert rotational motion into linear motion.

For example, the fourth driving apparatus 74 includes a third driver 741, a second transmission mechanism 742, and a transition piece 743. The third driver 741 and the second transmission mechanism 742 are installed on the material preparation platform 6, the transition piece 743 is installed on the second transmission mechanism 742, and the fifth positioning component 73 is connected to the transition piece 743. The third driver 741 drives the second transmission mechanism 742 to move to drive the transition piece 743 to move, and the transition piece 743 drives the fifth positioning component 73 to move along the fourth direction.

For example, the third driver 741 can be a motor or a rotary cylinder.

For example, the second transmission mechanism 742 can be a lead screw pair mechanism.

In this embodiment of this disclosure, the third driving apparatus 72 drives the fourth positioning component 71 to move along the third direction to change the distance between the fourth positioning component 71 and the reference positioning part 61 along the third direction to position adhesive films 100 of different sizes along the third direction. The fourth driving apparatus 74 drives the fifth positioning component 73 to move along the fourth direction to change the distance between the fifth positioning component 73 and the reference positioning part 61 along the fourth direction to position adhesive films 100 of different sizes along the fourth direction. In two intersecting directions in the plane intersecting the vertical direction, adhesive films 100 of different sizes are positioned by the reference positioning part 61, the fourth positioning component 71, and the fifth positioning component 73, so that the adhesive films 100 can be fully positioned in the plane intersecting the vertical direction. Therefore, the second positioning assembly 7 can better position adhesive films 100 of different sizes placed on the material preparation platform 6, achieving the purpose of compatibility with adhesive films 100 of different sizes.

In an embodiment, referring to FIG. 17 and FIG. 18, the material preparation platform 6 has multiple material preparation parts 62. The material preparation parts 62 are configured to bear the adhesive films 100 with the release papers 101 removed. The multiple material preparation parts 62 are arranged sequentially along the third direction, and the reference positioning part 61 is provided at a position corresponding to each material preparation part 62.

In this embodiment of this disclosure, the multiple material preparation parts 62 are arranged sequentially along the third direction, and the application assembly 8 can pick up multiple adhesive films 100 from the multiple material preparation parts 62 of the material preparation platform 6 at one time and apply them to surfaces of objects under application. The reference positioning part 61 is provided at a position corresponding to each material preparation part 62, and the adhesive films 100 on each material preparation part 62 are positioned by the corresponding reference positioning part 61.

It should be understood that the material preparation platform 6 bears the adhesive films 100 with the release papers 101 removed by the release paper removal assembly 5, the material picking assembly 4 places the adhesive films 100 with the release papers 101 removed on the material preparation parts 62 for positioning, and the application assembly 8 can pick up the positioned adhesive films 100 on the material preparation parts 62 and apply them to objects under application. Therefore, there will not be too many adhesive films 100 accumulated on the material preparation platform 6, the height of adhesive films 100 stacked sequentially in the vertical direction on the material preparation part 62 will not be too large, and even no adhesive films 100 on the material preparation part 62 will be stacked in the vertical direction because each material preparation part 62 bears one adhesive film 100. There will not be too many adhesive films 100 accumulated on the material preparation platform 6, and adhesive films 100 stored on each material preparation platform 6 are relatively short in the vertical direction.

In an embodiment, referring to FIG. 17, FIG. 18, and FIG. 20, the material preparation part 62 has third avoidance zones 621 extending along the third direction, and the fourth positioning component 71 includes a third mounting base 711 and first positioning pieces 712. The third mounting base 711 is disposed below the material preparation platform 6, and the third driving apparatus 72 drives the third mounting base 711 to move along the third direction. The first positioning piece 712 is connected above the third amounting base 711. The first positioning piece 712 has multiple first positioning protrusion parts 7121 passing through the material preparation platform 6. The multiple first positioning protrusion parts 7121 are spaced apart along the fourth direction. The first positioning piece 712 is disposed at a corresponding position of each material preparation part 62. The first positioning protrusion part 7121 is capable of moving within the corresponding third avoidance zone 621.

The third avoidance zone 621 is a space for avoiding the first positioning protrusion part 7121. The first positioning protrusion part 7121 moves within the third avoidance zone 621 to reduce the possibility of interference between the first positioning protrusion part 7121 and the material preparation part 62.

In this embodiment of this disclosure, the third mounting base 711 is below the material preparation platform 6, and the third mounting base 711 moving along the third direction will not block adhesive films 100 on the material preparation part 62, facilitating the application assembly 8 to pick up the adhesive films 100 on the material preparation platform 6. The first positioning piece 712 is connected above the third mounting base 711. Since there will not be too many adhesive films 100 accumulated on the material preparation platform 6, and the adhesive films 100 stored on each material preparation platform 6 are relatively short in the vertical direction, the size of the first positioning piece 712 in the vertical direction can be small, that is, the height of the first positioning piece 712 is small, making the first positioning piece 712 have good deformation resistance. Even if multiple first positioning protrusion parts 7121 are provided on the first positioning piece 712 to position the adhesive film 100 through abutting, deformation caused by a reactive force of the adhesive film 100 on the first positioning protrusion parts 7121 is small. The small deformation of the first positioning piece 712 and the multiple first positioning protrusion parts 7121 spaced apart along the fourth direction push the adhesive films 100 to move along the third direction to achieve positioning, making the first positioning piece 712 able to stably push the adhesive films 100 to move along the third direction, and alleviating skewing of the adhesive films 100 during the movement. The first positioning protrusion part 7121 moves within the third avoidance zone 621 to reduce the possibility of interference between the first positioning protrusion part 7121 and the material preparation part 62.

In an embodiment, referring to FIG. 17, FIG. 18, and FIG. 20, the multiple first positioning pieces 712 arranged along the third direction are all connected to the third mounting base 711.

The first positioning piece 712 is provided at a corresponding position of each material preparation part 62. The multiple material preparation parts 62 are arranged along the third direction. Correspondingly, the multiple first positioning pieces 712 are arranged along the third direction.

In this embodiment of this disclosure, the third driving apparatus 72 drives the third mounting base 711 to move along the third direction, and the third mounting base 711 drives the multiple first positioning pieces 712 connected to the third mounting base 711 to move together, realizing positioning of all adhesive films 100 on the multiple material preparation parts 62, thereby improving positioning efficiency.

In an embodiment, referring to FIG. 17, FIG. 18, and FIG. 20, each material preparation part 62 has multiple corresponding third avoidance zones 621, the multiple third avoidance zones 621 are spaced apart along the fourth direction, and the first positioning protrusion part 7121 is disposed at a corresponding position of each third avoidance zone 621.

In this embodiment of this disclosure, with the first positioning protrusion part 7121 provided at the corresponding position of each third avoidance zone 621. The third avoidance zone 621 and the first positioning protrusion part 7121 correspond one-to-one. A part of the material preparation part 62 between two adjacent third avoidance zones 621 can still support the adhesive film 100, so that the material preparation part 62 can better support the adhesive film 100.

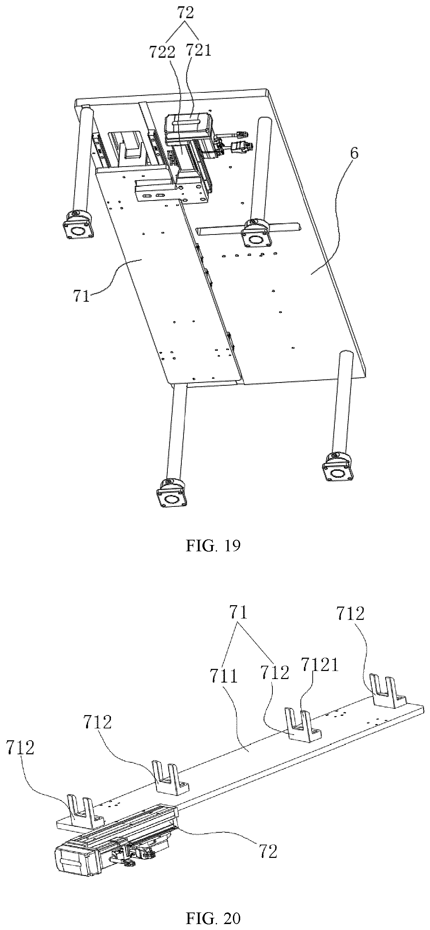

In an embodiment, referring to FIG. 20, the first positioning protrusion part 7121 is square-shaped.

In this embodiment of this disclosure, the square-shaped first positioning protrusion part 7121 is in surface contact with the adhesive film 100 during the process of pushing the adhesive film 100, facilitating the stable pushing of the adhesive film 100.

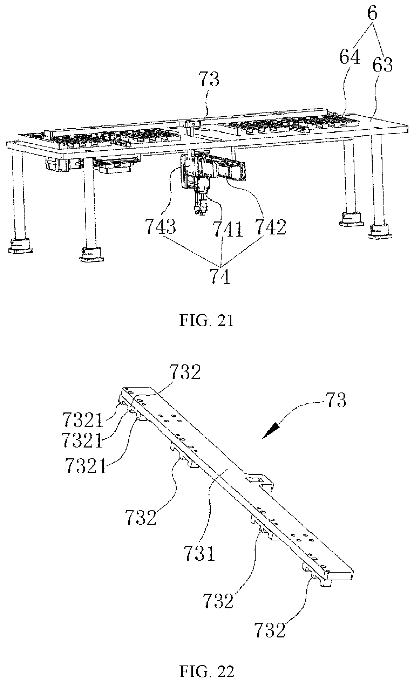

In an embodiment, referring to FIG. 18 and FIG. 22, the material preparation part 62 has fourth avoidance zones 622 extending along the fourth direction. The fifth positioning component 73 includes a fourth mounting base 731 and second positioning pieces 732. The fourth mounting base 731 is disposed on the material preparation platform 6. The fourth driving apparatus 74 drives the fourth mounting base 731 to move along the fourth direction. The second positioning piece 732 is connected to the fourth mounting base 731. The second positioning piece 732 has multiple second positioning protrusion parts 7321. The multiple second positioning protrusion parts 7321 are spaced apart along the third direction. The second positioning piece 732 is disposed at a corresponding position of each material preparation part 62. The second positioning protrusion part 7321 is capable of moving within the corresponding fourth avoidance zone 622.

The fourth avoidance zone 622 is a space for avoiding the second positioning protrusion part 7321.

In this embodiment of this disclosure, since adhesive films 100 will not accumulate too many on the material preparation part 62, the adhesive film 100 stored on the material preparation part 62 is relatively small in the vertical direction, that is, the height of the adhesive film 100 is small. Correspondingly, the height of the second positioning piece 732 is small. The second positioning piece 732 has good deformation resistance. Even if the second positioning piece 732 has multiple second positioning protrusion parts 7321 spaced apart along the third direction, a reactive force applied by the adhesive film 100 to the multiple second positioning protrusion parts 7321 will not cause significant deformation of the second positioning piece 732. The multiple second positioning protrusion parts 7321 spaced apart along the third direction push the adhesive film 100 to move along the fourth direction to achieve positioning, making the second positioning piece 732 able to stably push the adhesive film 100 to move along the fourth direction, and alleviating the possibility of the adhesive film 100 skewing in moving. The fourth driving apparatus 74 drives the fourth mounting base 731 to move. The fourth mounting base 731 drives the second positioning protrusion part 7321 of the second positioning piece 732 to move within the fourth avoidance zone 622, reducing the possibility of interference between the second positioning protrusion part 7321 and the material preparation part 62.

For example, a size of an adhesive film that can be compatible between the first positioning protrusion part 7121 and the reference positioning part 61 along the third direction is 0-320mm. A size of an adhesive film that can be compatible between the second positioning protrusion part 7321 and the reference positioning part 61 along the fourth direction is 0-200mm.

In an embodiment, referring to FIG. 18 and FIG. 22, each material preparation part 62 has multiple corresponding fourth avoidance zones 622. The multiple fourth avoidance zones 622 are spaced apart along the third direction. The second positioning protrusion part 7321 is disposed at a corresponding position of each fourth avoidance zone 622.

In this embodiment of this disclosure, with the multiple fourth avoidance zones 622 spaced apart along the third direction, a part of the material preparation part 62 between the two adjacent fourth avoidance zones 622 can still support the adhesive film 100 well. The arrangement of the fourth avoidance zones 622 can meet the needs of movement and positioning, and also make the material preparation parts 62 support the adhesive films 100 well.

In an embodiment, referring to FIG. 22, the second positioning protrusion part 7321 is square-shaped.

In this embodiment of this disclosure, the square-shaped second positioning protrusion part 7321 can be in surface contact with the adhesive film 100, making the second positioning piece 732 able to stably push the adhesive film 100 to move and position the second adhesive film 100.

In an embodiment, referring to FIG. 17, FIG. 18, and FIG. 21, the material preparation part 62 and the reference positioning part 61 are both located below the fourth mounting base 731. The fourth avoidance zone 622 is located above the material preparation part 62, and the bottom of the fourth avoidance zone 622 is closed.

With the bottom of the fourth avoidance zone 622 closed, the fourth avoidance zone 622 does not run through the material preparation platform 6 in the vertical direction.

In this embodiment of this disclosure, the material preparation part 62 and the reference positioning part 61 are both located below the fourth mounting base 731, reducing the possibility of interference between the fourth mounting base 731 and the material preparation part 62 and the reference positioning part 61. The fourth avoidance zone 622 is located above the material preparation part 62. The bottom of the fourth avoidance zone 622 is closed. The second positioning protrusion part 7321 of the second positioning piece 732 connected to the fourth mounting base 731 extends into the fourth avoidance zone 622 from a position above the fourth avoidance zone 622. The fourth avoidance zone 622 does not run through the material preparation platform 6 in the vertical direction, which helps increase the strength of the material preparation platform 6.

In an embodiment, referring to FIG. 21, the third driver 741 and the second transmission mechanism 742 are disposed below the material preparation platform 6, and the transition piece 743 runs through the material preparation platform 6 to connect with the fourth mounting base 731.

In this embodiment of this disclosure, the third driver 741 drives the transmission mechanism to move to drive the transition piece 743 to move along the fourth direction. The transition piece 743 drives the fourth mounting base 731 to move along the fourth direction. The third driver 741 and the second transmission mechanism 742 are disposed below the material preparation platform 6, reducing the possibility of interference between the third driver 741 and the second transmission mechanism 742 and the material preparation part 62 above the material preparation platform 6.

In an embodiment, referring to FIG. 22, the multiple second positioning pieces 732 arranged along the third direction are all connected to the fourth mounting base 731.

The second positioning piece 732 is provided at a corresponding position of each material preparation part 62. The multiple material preparation parts 62 are arranged along the third direction. Correspondingly, the multiple second positioning pieces 732 are disposed along the third direction.

In this embodiment of this disclosure, the fourth driving apparatus 74 drives the fourth mounting base 731 to move along the fourth direction. The fourth mounting base 731 drives the multiple second positioning pieces 732 connected to the fourth mounting base 731 to move together, realizing positioning of the adhesive films 100 on the multiple material preparation parts 62 together, thereby improving positioning efficiency.

In an embodiment, referring to FIGs. 16 to 18 and FIG. 21, the material preparation platform 6 includes a workbench 63 and trays 64. The workbench 63 is connected to the rack 1, and the second positioning assembly 7 is disposed on the workbench 63. The trays 64 are installed above the workbench 63. The trays 64 are configured to bear the adhesive films 100 with the release papers 101 removed.

The trays 64 are configured to bear the adhesive films 100.

For example, the material preparation part 62 is formed on the tray 64.

For example, the reference positioning part 61 is formed on the tray 64.

For example, the third avoidance zone 621 runs through the tray 64 and the workbench 63.

For example, the fourth avoidance zone 622 is formed on the tray 64.

For example, referring to FIG. 18, four trays 64 are arranged along the third direction, and each tray 64 has a material preparation part 62.

In this embodiment of this disclosure, the workbench 63 connected to the rack 1 is a main part of the material preparation platform 6. The workbench 63 can support the trays 64 above it for bearing the adhesive films 100. The second positioning assembly 7 is disposed on the workbench 63 supporting the trays 64, facilitating the second positioning assembly 7 to position the adhesive films 100 on the trays 64.

In an embodiment, referring to FIG. 23, the tray 64 has ribs 641 above it for bearing the adhesive films 100 with the release papers 101 removed, multiple ribs 641 are provided, and the multiple ribs 641 are spaced apart.

In this embodiment of this disclosure, the ribs 641 spaced apart can reduce the contact area between the adhesive films 100 and the tray 64, reducing adhesion between a surface of the adhesive film 100 with the release paper 101 removed and the tray 64, facilitating the application assembly 8 to pick up the adhesive film 100 on the tray 64.

In an embodiment, referring to FIG. 24 to FIG. 26, the material picking assembly 4 includes a first transfer part 42 and material picking apparatuses 43. The first transfer part 42 is disposed on the rack 1. The material picking apparatus 43 is disposed on the first transfer part 42. The first transfer part 42 drives the material picking apparatus 43 to move. The material picking apparatus 43 includes a first airflow distributor 431 and a first suction assembly 432 connected to each other. The first airflow distributor 431 is disposed on the first transfer part 42. The first airflow distributor 431 has multiple first air chambers and negative pressure interfaces. Multiple first air chambers are provided, and the multiple first air chambers are separated from each other. Each first air chamber communicates with a corresponding negative pressure interface. The picking part 41 is formed on the first suction assembly 432. Each first air chamber communicates with the corresponding picking part 41.

The first transfer part 42 disposed on the rack 1 is a main movement structure of the material picking assembly 4.

The material picking apparatus 43 picks up the adhesive film 100 through picking parts 41 of the first suction assembly 432.

The multiple first air chambers are separated from each other, and air pressure in each first air chamber can be adjusted separately. For example, one of the first air chambers is suctioned to create negative pressure through a negative pressure interface, and air pressure in the other first air chambers can remain unchanged and unaffected by the negative pressure.

In this embodiment of this disclosure, the first airflow distributor 431 has the multiple separated first air chambers, and the corresponding first air chamber can be suctioned to create negative pressure through the negative pressure interface, so that the picking part 41 corresponding to the first air chamber suctioned to create negative pressure can suck up the adhesive film 100, achieving picking-up of the adhesive film 100. According to different sizes of adhesive films 100, picking parts 41 that need to create negative pressure to suck up adhesive films 100 will also be different accordingly. A first air chamber that is corresponding to a picking part 41 and that needs to create negative pressure is suctioned to create negative pressure through a negative pressure interface, thereby sucking up an adhesive film 100 of a corresponding size. For a small adhesive film 100, with some of the first air chambers suctioned to create negative pressure, the adhesive film 100 can be can firmly sucked up, achieving picking-up of the adhesive film 100, which is conducive to energy saving and consumption reduction.

In the process of sucking the adhesive films 100, the material picking apparatus 43 of this embodiment of this disclosure is not limited to suctioning a corresponding first air chamber to create negative pressure according to sizes of adhesive films 100. For example, all the first air chambers can be suctioned to create negative pressure, and all the picking parts 41 communicating with the first air chamber can suck up the adhesive films 100. For a material picking apparatus 43 where all first air chambers are suctioned to create negative pressure, the picking parts 41 of the material picking apparatus 43 can suck up adhesive films 100 of any size, achieving picking-up of adhesive films 100 by the material picking apparatus 43.

The first airflow distributor 431 of this embodiment of this disclosure is not limited to multiple separated first air chambers. For example, the multiple first air chambers can be in communication, or one first air chamber can be provided. When any first air chamber is suctioned to create negative pressure through a negative pressure interface, all first air chambers have negative pressure.

In an embodiment, referring to FIG. 27, one of the first air chambers is a main air chamber 43111, one of the first air chambers is a first extension air chamber 43112, the first extension air chamber 43112 spans a side of the main air chamber 43111 along a fifth direction and a side of the main air chamber 43111 along a sixth direction, the fifth direction and the sixth direction are set to intersect each other, both the fifth direction and the sixth direction are set to intersect an arrangement direction of the first airflow distributor 431 and the first suction assembly 432, one of the first air chambers is a second extension air chamber 43113, the second extension air chamber 43113 is located on a side of the first extension air chamber 43112 along the fifth direction, one of the first air chambers is a third extension air chamber 43114, and the third extension air chamber 43114 is located on a side of the first extension air chamber 43112 along the sixth direction.

The material picking apparatus 43 sucks up the adhesive film 100, and the arrangement direction of the first airflow distributor 431 and the first suction assembly 432 is disposed to roughly intersect with a surface of the adhesive film 100 to be sucked up. When sizes of adhesive films 100 are different, sizes of surfaces of the adhesive films 100 to be sucked up vary.

In this embodiment of this disclosure, with the first extension air chamber 43112 spanning the side of the main air chamber 43111 along the fifth direction and the side of the main air chamber 43111 along the sixth direction, the first extension air chamber 43112 extends along the fifth direction and the sixth direction respectively. Since the fifth direction and the sixth direction both intersect the arrangement direction of the first airflow distributor 431 and the first suction assembly 432, with the main air chamber 43111 and the first extension air chamber 43112 extending along the fifth direction and the sixth direction respectively, larger adhesive films 100 can be sucked up. The adhesive films 100 sucked up by the picking parts 41 of the material picking apparatus 43 need to have the release papers 101 removed by the release paper removal assembly 5. The material picking apparatus 43 should suck up edges of the adhesive films 100 as much as possible to facilitate the release paper removal assembly 5 to remove the release papers 101 of the adhesive films 100. Therefore, the sizes of the first suction assembly 432 of the material picking apparatus 43 in the fifth direction and the sixth direction should be made as large as possible. The second extension air chamber 43113 is located on a side of the first extension air chamber 43112 along the fifth direction. The third extension air chamber 43114 is located on a side of the first extension air chamber 43112 along the sixth direction. Since the second extension air chamber 43113 and the third extension air chamber 43114 are separated from each other, the second extension air chamber 43113 and the third extension air chamber 43114 can have appropriately small depths. This helps to improve sucking-up forces of the second extension air chamber 43113 and the third extension air chamber 43114 when negative pressure suction are performed respectively, so tht the adhesive films 100 can be firmly sucked up.

For example, referring to FIG. 27, the projection zone of the first airflow distributor 431 along the arrangement direction of the first airflow distributor 431 and the first suction assembly 432 is rectangular. A length direction of the first airflow distributor 431 is disposed along the fifth direction, and the width direction of the first airflow distributor 431 is disposed along the sixth direction. The second extension air chamber 43113 and the third extension air chamber 43114 are separated from each other, and the depth of the second extension air chamber 43113 along the fifth direction and the depth of the third extension air chamber 43114 along the fifth direction can be appropriately smaller. The second extension air chamber 43113 and the third extension air chamber 43114 can obtain greater negative pressure suction force under the suction of the corresponding negative pressure suction ports.

For example, the main air chamber 43111 is suctioned to create negative pressure to make the corresponding picking part 41 suck up smaller adhesive films 100. The first extension air chamber 43112, the second extension air chamber 43113, and the third extension air chamber 43114 are not suctioned to create negative pressure. Air pressure corresponding to no negative pressure suction is roughly atmospheric pressure. For larger adhesive films 100, the main air chamber 43111 and the first extension air chamber 43112 can be suctioned to create negative pressure to make corresponding picking parts 41 suck up the adhesive films 100. The second extension air chamber 43113 and the third extension air chamber 43114 are not suctioned to create negative pressure. Air pressure corresponding to no negative pressure suction is roughly atmospheric pressure. Suctioning the main air chamber 43111, the first extension air chamber 43112, and the second extension air chamber 43113 to create negative pressure allows the first suction assembly 432 to suck up adhesive films 100 of a maximum fifth-direction size, with the third extension air chamber 43114 not suctioned to create negative pressure. Suctioning the main air chamber 43111, the first extension air chamber 43112, and the third extension air chamber 43114 to create negative pressure allows the first suction assembly 432 to suck up adhesive films 100 of a maximum sixth-direction size, with the second extension air chamber 43113 not suctioned to create negative pressure. Suctioning the main air chamber 43111, the first extension air chamber 43112, the second extension air chamber 43113, and the third extension air chamber 43114 to create negative pressure allows the first suction assembly 432 to suck up adhesive films 100 of a maximum size.

For example, whether the first air chambers are suctioned to create negative pressure or not depends on a size range of the adhesive film 100 to be sucked up rather a specific size of the adhesive film 100 to be sucked up.

For example, when the main air chamber 43111 is suctioned to create negative pressure and the first extension air chamber 43112, the second extension air chamber 43113, and the third extension air chamber 43114 are not suctioned to create negative pressure, adhesive films 100 of a certain size range rather than adhesive films 100 of a specific size are correspondingly sucked up. When the main air chamber 43111 and the first extension air chamber 43112 are suctioned to create negative pressure and the second extension air chamber 43113 and the third extension air chamber 43114 are not suctioned to create negative pressure, adhesive films 100 of a certain size range rather than adhesive films 100 of a specific size are correspondingly sucked up.

It should be understood that the extension manner of the first air chamber is not limited to the above manner. For example, the second extension air chamber and the third extension air chamber 43114 can communicate with each other. The main air chamber 43111 and the first extension air chamber 43112 are separated from each other. The main air chamber 43111 is separated from the second extension air chamber 43113 and the third extension air chamber 43114. The first extension air chamber 43112 is separated from the second extension air chamber 43113 and the third extension air chamber 43114.

In an embodiment, referring to FIGs. 24 to 26, the first transfer part 42 includes a first transfer body 421 and a first mounting rack 422 disposed on the first transfer body 421. The first transfer body 421 drives the first mounting rack 422 to move. The first mounting rack 422 is connected to a side of the first airflow distributor 431 facing away from the first suction assembly 432. The negative pressure interface is located on an outer side surface of the first airflow distributor 431. An arrangement direction of the first airflow distributor 431 and the first suction assembly 432 intersects an orientation of the negative pressure interface.

In this embodiment of this disclosure, with the negative pressure interface located on the outer side surface of the first airflow distributor 431, and the arrangement direction of the first airflow distributor 431 and the first suction assembly 432 intersecting the orientation of the negative pressure interface, the orientation of the negative pressure interface can avoid the first mounting rack 422 as much as possible. This reduces the possibility of interference between negative pressure pipes connected to the negative pressure interface and the first mounting rack 422.

In an embodiment, referring to FIG. 27, a negative pressure interface communicating with the main air chamber 43111 is a first negative pressure interface 43121, the first negative pressure interface 43121 is disposed on both a side of the main air chamber 43111 along the fifth direction and a side of the main air chamber 43111 along the sixth direction, a negative pressure interface communicating with the first extension air chamber 43112 is a second negative pressure interface 43122, the second negative pressure interface 43122 is provided on a side of the first extension air chamber 43112 facing towards the corresponding first negative pressure interface 43121 along the fifth direction, the second negative pressure interface 43122 is provided on a side of the first extension air chamber 43112 facing towards the corresponding first negative pressure interface 43121 along the sixth direction, a negative pressure interface communicating with the second extension air chamber 43113 is a third negative pressure interface 43123, the third negative pressure interface 43123 is provided on a side of the second extension air chamber 43113 facing away from the first extension air chamber 43112 along the fifth direction, a negative pressure interface communicating with the third extension air chamber 43114 is a fourth negative pressure interface 43124, and the fourth negative pressure interface 43124 is provided on a side of the third extension air chamber 43114 facing away from the first extension air chamber 43112 along the sixth direction.

In this embodiment of this disclosure, the negative pressure interface is located on the outer side surface of the first airflow distributor 431. The arrangement direction of the first airflow distributor 431 and the first suction assembly 432 intersects the orientation of the negative pressure interface. With the first negative pressure interface 43121 provided on both the side of the main air chamber 43111 along the fifth direction and the side of the main air chamber 43111 along the sixth direction, the main air chamber 43111 is suctioned from different directions, helping to increase the negative pressure suction force at each position in the main air chamber 43111. Since the first extension air chamber 43112 spans a side of the main air chamber 43111 along the fifth direction and a side of the main air chamber 43111 along the sixth direction, the depth of the first extension air chamber 43112 along the fifth direction and the depth along the sixth direction are not very large. The position arrangement of the second negative pressure interface 43122 first allows the first extension air chamber 43112 to be suctioned from different directions, which helps to improve the negative pressure suction force at each position in the main air chamber 43111, and second, facilitates the arrangement of the second extension air chamber 43113 and the third negative pressure interface 43123 on a side of the first extension air chamber 43112 facing away from the main air chamber 43111 along the fifth direction, and facilitates the arrangement of the third extension air chamber 43114 and the fourth negative pressure interface 43124 on a side of the first extension air chamber 43112 along the sixth direction. The second extension air chamber 43113 is provided with the third negative pressure interface 43123 on a side facing away from the first extension air chamber 43112 along the fifth direction, leading to a small depth of the second extension air chamber 43113 along the fifth direction. This helps to improve the negative pressure suction force of the second extension air chamber 43113. The third extension air chamber 43114 is provided with the fourth negative pressure interface 43124 on a side facing away from the first extension air chamber 43112 along the sixth direction, making a small depth of the third extension air chamber 43114 along the sixth direction. This helps to improve the negative pressure suction force of the third extension air chamber 43114.

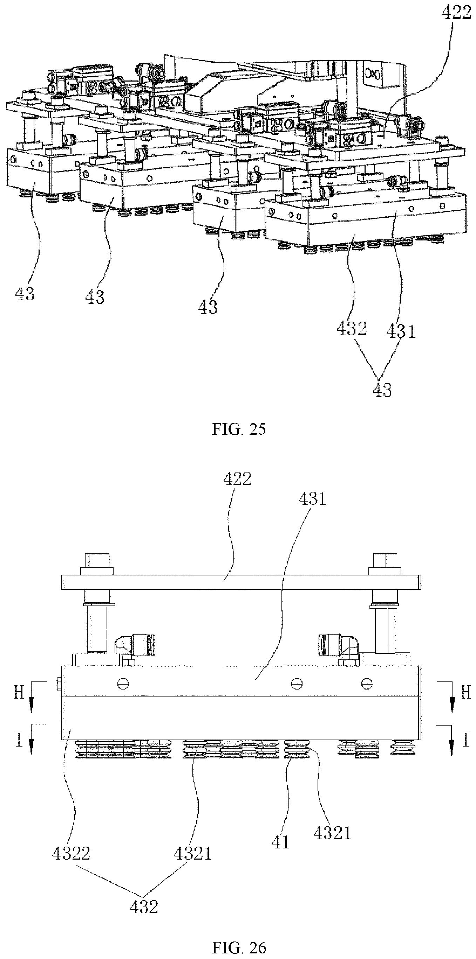

In an embodiment, referring to FIGs. 26 to 28, the first suction assembly 432 includes first suction nozzles 4321 and a first protection block 4322. The first suction nozzle 4321 is installed on the first airflow distributor 431, each first air chamber communicates with the corresponding first suction nozzle 4321, and the picking part 41 is formed on the first suction nozzle 4321. The first protection block 4322 is connected to the side of the first airflow distributor 431 facing towards the first suction nozzle 4321, the first protection block 4322 has an avoidance hole 43221, the avoidance hole 43221 runs through the first protection block 4322, the first suction nozzle 4321 passes through the avoidance hole 43221, and the first suction nozzle 4321 partially protrudes from the side of the first protection block 4322 facing away from the first airflow distributor 431.

In this embodiment of this disclosure, the first suction nozzle 4321 is installed on the first airflow distributor 431. When the first air chamber is suctioned to create negative pressure, the corresponding first suction nozzle 4321 can suck up the adhesive film 100 through the picking part 41. The first protection block 4322 is connected to the side of the first airflow distributor 431 facing towards the first suction nozzle 4321, the avoidance hole 43221 runs through the first protection block 4322, the first suction nozzle 4321 partially protrudes from the side of the first protection block 4322 facing away from the first airflow distributor 431, and the first suction nozzle 4321 passing through the avoidance hole 43221 can run through the first protection block 4322, facilitating the first suction nozzle 4321 to suck up the adhesive film 100. The external lateral impact in the direction intersecting the vertical direction will be blocked by the first protection block 4322, and the first protection block 4322 blocks the lateral external impact to protect the first suction nozzle 4321 in the avoidance hole 43221, reducing the impact of the lateral external impact on the first suction nozzle 4321, facilitating the first suction nozzle 4321 to suck up the adhesive film 100 more stably.

In an embodiment, referring to FIG. 28, the avoidance hole 43221 is a long hole, multiple avoidance holes 43221 are provided, the multiple avoidance holes 43221 are spaced apart, and multiple first suction nozzles 4321 in each avoidance hole 43221 are arranged sequentially along a length direction of the avoidance hole 43221.

For example, multiple first suction nozzles 4321 in each avoidance hole 43221 are arranged sequentially along the length direction of the avoidance hole 43221, and the first suction nozzles 4321 in each avoidance hole 43221 can communicate with the same first air chamber or with different first air chambers.

In this embodiment of this disclosure, multiple first suction nozzles 4321 in each avoidance hole 43221 are arranged sequentially along the length direction of the avoidance hole 43221. A small size of the avoidance hole 43221 in the width direction can be set, facilitating the arrangement of more avoidance holes 43221 spaced apart. A part between two avoidance holes 43221 of the first protection block 4322 can be connected to the first airflow distributor 431 through a connecting member 534. The connecting member 534 for connecting the first protection block 4322 and the first airflow distributor 431 can be flexibly disposed between the two corresponding avoidance holes 43221 as needed, facilitating a more secure connection between the first protection block 4322 and the first airflow distributor 431.

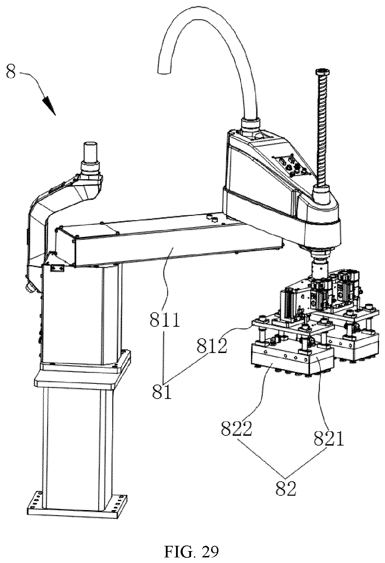

In an embodiment, referring to FIG. 29 and FIG. 30, the application assembly 8 includes a second transfer part 81 and application apparatuses 82. The second transfer part 81 is disposed on the rack 1. The application apparatus 82 is disposed on the second transfer part 81. The second transfer part 81 drives the application apparatuses 82 to move to pick up the adhesive films 100 on the material preparation platform 6 for application. The application apparatus 82 includes a second airflow distributor 821 and a second suction assembly 822 connected to each other. The second airflow distributor 821 is disposed on the second transfer part 81. The second airflow distributor 821 has second air chambers and suction interfaces. Multiple second air chambers are provided, and the multiple second air chambers are separated from each other. Each second air chamber communicates with the corresponding suction interface. The second suction assembly 822 has suction parts 8221 for sucking up the adhesive films 100. Each second air chamber communicates with the corresponding suction part 8221.

The first transfer part 42 disposed on the rack 1 is the main movement structure of the material picking assembly 4. The second airflow distributor 821 is driven to move by the second transfer part 81 to drive the second suction assembly 822 to move.

In this embodiment of this disclosure, the multiple second air chambers are separated from each other. Each air chamber communicates with the corresponding suction part 8221. When any one of the second air chambers is suctioned to create negative pressure through the suction interface, the corresponding suction part 8221 can create negative pressure to suck up adhesive films 100. The corresponding second air chamber is suctioned to create negative pressure by sizes of adhesive films 100, so that the suction part 8221 communicating with the corresponding second air chamber can suck up adhesive films 100. Remaining second air chambers among all second air chambers are not suctioned to create negative pressure. For smaller adhesive films 100, the adhesive films 100 can be sucked up by suctioning some of the second air chambers to create negative pressure. This is beneficial for reducing energy consumption.

In an embodiment, referring to FIG. 29 and FIG. 30, the second transfer part 81 includes a second transfer body 811 and a second mounting rack 812 disposed on the second transfer body 811, the second transfer body 811 drives the second mounting rack 812 to move, the second mounting rack 812 is connected to the side of the second airflow distributor 821 facing away from the second suction assembly 822, the suction interface is located on the outer side surface of the second airflow distributor 821, and the arrangement direction of the second airflow distributor 821 and the second suction assembly 822 intersects the orientation of the suction interface.

In this embodiment of this disclosure, the second transfer body 811 drives the second mounting rack 812 to move, and the second mounting rack 812 drives the second airflow distributor 821 to move. The suction interface is located on the outer side surface of the second airflow distributor 821, the arrangement direction of the second airflow distributor 821 and the second suction assembly 822 intersects the orientation of the suction interface, and the orientation of the suction interface is not in the same direction as the second mounting rack 812, reducing the possibility of interference between the external negative pressure pipes connected to the suction interface and the second mounting rack 812.

It should be understood that the application apparatuses 82 sucks up the adhesive films 100 on the material preparation platform 6 to adhere them to surfaces of objects under application. The adhesive films 100 sucked up by the application apparatuses 82 are transferred to the surfaces of the objects under application. The adhesive films 100 sucked up by the application apparatuses 82 do not need to withstand the tearing force similar to that applied by the release paper removal assembly 5 to remove the release papers 101. The sucking-up force of the application apparatus 82 on the adhesive films 100 can be appropriately reduced, and it is not necessary to suck up edges of the adhesive films 100 as much as possible. Therefore, the second airflow distributor 821 and the second suction assembly 822 of the application apparatus 82 can be appropriately made smaller than the adhesive films 100. For example, the length of the second airflow distributor 821 can be 0-230mm, and the width of the second airflow distributor 821 can be 0-130mm.

In an embodiment, referring to FIG. 31, one of the second air chambers is an edge air chamber 8211, the edge air chamber 8211 includes a first sub-chamber 82111 and a second sub-chamber 82112 communicating with each other, the first sub-chamber 82111 extends along the seventh direction, the second sub-chamber 82112 extends along the eighth direction, the seventh direction and the eighth direction are set to intersect each other, the seventh direction and the eighth direction both intersect the arrangement direction of the second airflow distributor 821 and the second suction assembly 822, the suction interface communicating with the first sub-chamber 82111 is a first suction interface 82121, the first suction interface 82121 is located at the end of the first sub-chamber 82111 facing away from the second sub-chamber 82112 along the seventh direction, the suction interface communicating with the second sub-chamber 82112 is a second suction interface 82122, and the second suction interface 82122 is located at the end of the second sub-chamber 82112 facing away from the first sub-chamber 82111 along the eighth direction; all the second air chambers except for the edge air chamber 8211 are auxiliary air chambers 8213, the auxiliary air chambers 8213 are located on the side of the first sub-chamber 82111 facing towards the second suction interface 82122, and the auxiliary air chambers 8213 are located on the side of the second sub-chamber 82112 facing towards the first suction interface 82121.

The seventh direction and the eighth direction are set to intersect each other, the seventh direction and the eighth direction both intersect the arrangement direction of the second airflow distributor 821 and the second suction assembly 822, the second suction assembly 822 sucks up the adhesive films 100 roughly along the arrangement direction of the second airflow distributor 821 and the second suction assembly 822, and the second suction assembly 822 can adapt to adhesive films 100 of different sizes along the seventh direction and/or the eighth direction.

In this embodiment of this disclosure, the suction interface is located on the outer side surface of the second airflow distributor 821. The arrangement direction of the second airflow distributor 821 and the second suction assembly 822 intersects the orientation of the suction interface. Since the first sub-chamber 82111 and the second sub-chamber 82112 are disposed to intersect each other, the auxiliary air chambers 8213 are located on the side of the first sub-chamber 82111 facing towards the second suction interface 82122. The auxiliary air chambers 8213 are located on the side of the second sub-chamber 82112 facing towards the first suction interface 82121. The suction interfaces corresponding to the auxiliary air chambers 8213 are all located on the side of the edge air chamber 8211 facing towards the auxiliary air chambers 8213. The side of the edge air chamber 8211 facing away from the auxiliary air chambers 8213 is not provided with suction interfaces, which helps simplify the structure of the second airflow distributor 821 and reduce the processing difficulty of the second airflow distributor 821. Since the suction force required for the second suction assembly 822 to suck up the adhesive films 100 is relatively small, the second airflow distributor 821 and the second suction assembly 822 of the application apparatus 82 can be appropriately made smaller than the adhesive films 100, and the depth of the first sub-chamber 82111 along the seventh direction and the depth of the second sub-chamber 82112 along the eighth direction are relatively small. The negative pressure suction force at the end of the first sub-chamber 82111 along the seventh direction facing away from the first suction interface 82121 can still basically meet the suction force requirements for sucking up the adhesive films 100, and the negative pressure suction force at the end of the second sub-chamber 82112 along the eighth direction facing away from the second suction interface 82122 can still basically meet the suction force requirements for sucking up the adhesive films 100.

For example, referring to FIG. 31, a suction interface corresponding to the auxiliary air chamber 8213 is a third suction interface 82123. The third suction interface 82123 communicates with the auxiliary air chamber 8213. The third suction interface 82123 is located on a side of the edge air chamber 8211 facing towards the auxiliary air chamber 8213.

For example, referring to FIG. 31, for smaller adhesive films 100, the edge air chamber 8211 can be suctioned to create negative pressure. Alternatively, the edge air chamber 8211 and some auxiliary air chambers 8213 can be suctioned to create negative pressure to suck up the adhesive films 100, and the remaining second air chambers are not suctioned to create negative pressure. For larger adhesive films 100, the edge air chamber 8211 and all auxiliary air chambers 8213 can be suctioned to create negative pressure to suck up the adhesive films 100.

For example, whether the second air chambers are suctioned to create negative pressure or not, they correspond to sucking up the adhesive films 100 within a certain size range, rather than sucking up a specific size of the adhesive films 100.

For example, referring to FIG. 30, the second suction assembly 822 includes a second suction nozzle 8222 and a second protection block 8223. The second suction nozzle 8222 and the second protection block 8223 are connected to the second airflow distributor 821 respectively, the second suction nozzle 8222 communicates with the corresponding second air chamber, the suction part 8221 is formed on the second suction nozzle 8222, the second suction nozzle 8222 runs through the second protection block 8223, and the second suction nozzle 8222 protrudes from the side of the second protection block 8223 facing away from the second airflow distributor 821.

For example, the length of the second protection block 8223 can be 0-230mm, and the width of the second protection block 8223 can be 0-130mm.

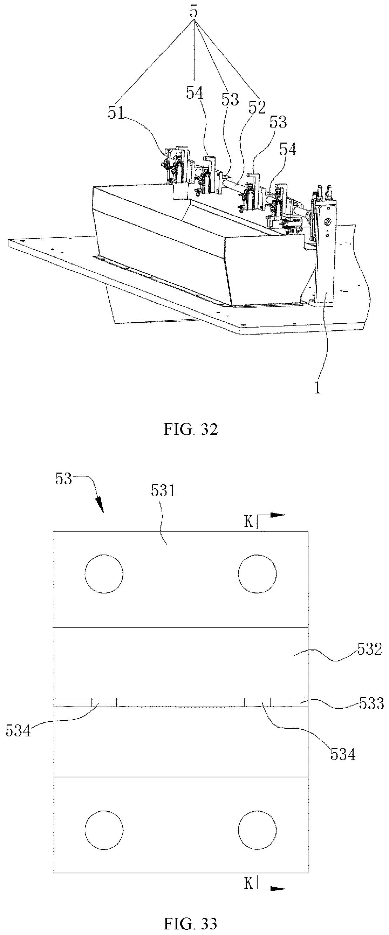

In an embodiment, referring to FIG. 32, the release paper removal assembly 5 includes an installation shaft 52, adjustment seats 53, and clamping mechanisms 54. The paper removal driving apparatus 51 is disposed on the rack 1. The installation shaft 52 is disposed on the paper removal driving apparatus 51, and the paper removal driving apparatus 51 drives the installation shaft 52 to move. The adjustment seat 53 has a locked state and an unlocked state, the adjustment seat 53 moves with the installation shaft 52 in the locked state, and the adjustment seat 53 can move relative to the installation shaft 52 along an axial direction of the installation shaft 52 in the unlocked state. The clamping mechanisms 54 are disposed on the adjustment seats 53 to move with the adjustment seats 53. The clamping mechanisms 54 are configured to clamp the release paper 101 of the adhesive film 100, multiple clamping mechanisms 54 are provided, and the multiple clamping mechanisms 54 are spaced apart along the axial direction of the installation shaft 52.

In this embodiment of this disclosure, the paper removal driving apparatus 51 drives the installation shaft 52 to move, driving the adjustment seats 53 and the clamping mechanisms 54 to move, and the clamping mechanisms 54 that clamp the release paper 101 drive the release paper 101 of the adhesive film 100 to be removed from the adhesive film body 102. The adjustment seat 53 switches between the locked state and the unlocked state. When the size of the adhesive film 100 changes, the adjustment seat 53 is switched from the locked state to the unlocked state, and the position of the adjustment seat 53 is adjusted along the axial direction of the installation shaft 52 to adapt to adhesive films 100 of different sizes. After adjusting the adjustment seat 53 to the corresponding position, the adjustment seat 53 is switched from the unlocked state to the locked state, so that the installation shaft 52 can drive the adjustment seat 53 in the locked state to move.

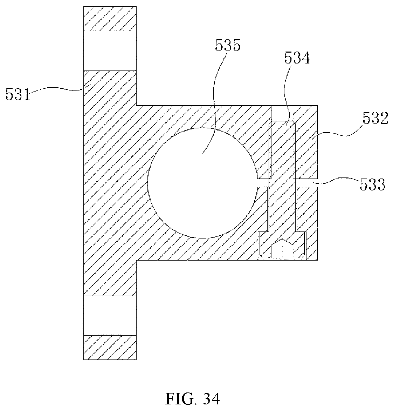

In an embodiment, referring to FIG. 33 and FIG. 34, the adjustment seat 53 includes a seat body 531, a locking block 532, and a connecting member 534. The clamping mechanism 54 is installed on the seat body 531, the locking block 532 is connected to the side of the seat body 531 facing away from the clamping mechanism 54, the locking block 532 has an installation cavity 535 and an adjustment gap 533 communicating with the installation cavity 535, the connecting member 534 passes through the adjustment gap 533 and is connected to the locking block 532, the connecting member 534 is configured to change the adjustment gap 533, and the installation shaft 52 runs through the installation cavity 535.

In this embodiment of this disclosure, the installation shaft 52 runs through the installation cavity 535, and the adjustment gap 533 communicating with the installation cavity 535 is increased by the connecting member 534 connected to the locking block 532, thereby increasing the space of the installation cavity 535. When the locking block 532 loosens the installation shaft 52, the adjustment seat 53 is in the unlocked state. When the adjustment gap 533 communicating with the installation cavity 535 is reduced by the connecting member 534 connected to the locking block 532, the space of the installation cavity 535 is correspondingly reduced. When the locking block clamps the installation shaft 52, the adjustment seat 53 is in the locked state.

For example, the connecting member 534 can be a screw. Tightening the locking block with a screw reduces the adjustment gap 533, and loosening the screw to release the locking block can increase the adjustment gap 533.

For example, the embodiments of this disclosure are not limited to adjusting the position of the adjustment seat 53 to adapt to adhesive films 100 of different sizes. For example, the clamping part of the clamping mechanism 54 extends along the axial direction of the installation shaft 52, and the clamping part extending along the axial direction of the installation shaft 52 clamps the release paper 101 of multiple adhesive films 100 together, which can adapt to the clamping of adhesive films 100 of various different sizes, and it is not necessary to adaptively adjust the release paper removal assembly 5 for adhesive films 100 of different sizes.

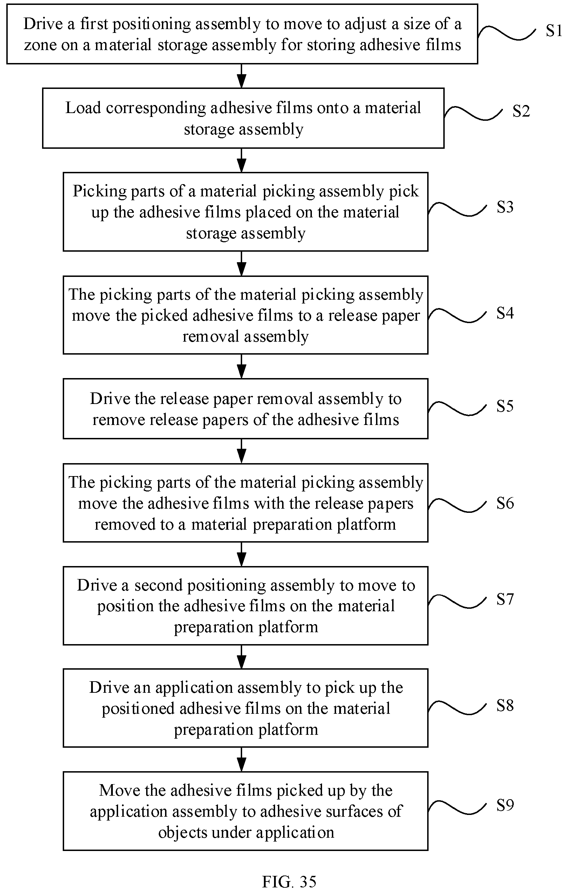

An embodiment of this disclosure provides an adhesive application method. Referring to FIG. 35, the method includes:
Step S1: Drive a first positioning assembly to move to adjust a size of a zone on a material storage assembly for storing adhesive films.
Step S2: Load corresponding adhesive films onto the material storage assembly.
Step S3: Picking parts of a material picking assembly pick up the adhesive films placed in the material storage assembly.
Step S4: The picking parts of the material picking assembly move the picked adhesive films to a release paper removal assembly.
Step S5: Drive the release paper removal assembly to remove release papers of the adhesive films.
Step S6: The picking parts of the material picking assembly move the adhesive films with the release papers removed to a material preparation platform.
Step S7: Drive a second positioning assembly to move to position the adhesive films on the material preparation platform.
Step S8: Drive an application assembly to pick up the positioned adhesive films on the material preparation platform.
Step S9: Move the adhesive films picked up by the application assembly to adhesive surfaces of objects under application.

For example, the object under application can be a battery cell.

For example, the first positioning assembly 3 can be manually, pneumatically, or electrically driven.

For example, the adhesive films 100 can be placed in the material storage assembly 2 first, and then the first positioning assembly 3 is configured to adjust a size of a zone on the material storage assembly 2 for storing the adhesive films 100 to position the adhesive films 100 in the material storage assembly 2.

For example, the first positioning assembly 3 can be driven to move first to adjust the size of the zone on the material storage assembly 2 for storing the adhesive films 100, and then the adhesive films 100 are stored in the zone adjusted by the first positioning assembly 3 for storing the adhesive films 100.

For example, during the process of the release paper removal assembly 5 removing the release papers 101, the adhesive films 100 are in the state of being picked up by the material picking assembly 4.

For example, the operator manually loads the adhesive films 100 onto the material storage assembly 2 of the adhesive application device.

For example, automatic loading of the adhesive films 100 can be adopted according to actual needs.

For example, the material picking assembly four picks up four adhesive films 100 at a time.

For example, the application assembly 8 picks up two adhesive films 100 at a time.

In this embodiment of this disclosure, the movement adjustment of the first positioning assembly 3 realizes the positioning of adhesive films 100 of different sizes in the material storage assembly 2. The material picking assembly 4 moves the adhesive films 100 in the material storage assembly 2 to the release paper removal assembly 5, the release paper removal assembly 5 removes the release paper 101 of the adhesive film 100, and the adhesive films 100 with the release papers 101 removed is transferred to the material preparation platform 6 by the material picking assembly 4. The movement adjustment of the second positioning assembly 7 realizes the positioning of adhesive films 100 of different sizes on the material preparation platform 6. The application assembly 8 applies the positioned adhesive films 100 on the material preparation platform 6 to the surfaces of the objects under application. With adhesive films 100 of different sizes in the material storage assembly 2 positioned by the first positioning assembly 3, and adhesive films 100 of different sizes on the material preparation platform 6 positioned by the second positioning assembly 7, the adhesive application device can complete the operation process of adhesive films 100 of different sizes from material loading to adhering to the object under application, thereby achieving the purpose of compatibility with adhesive films 100 of different sizes.

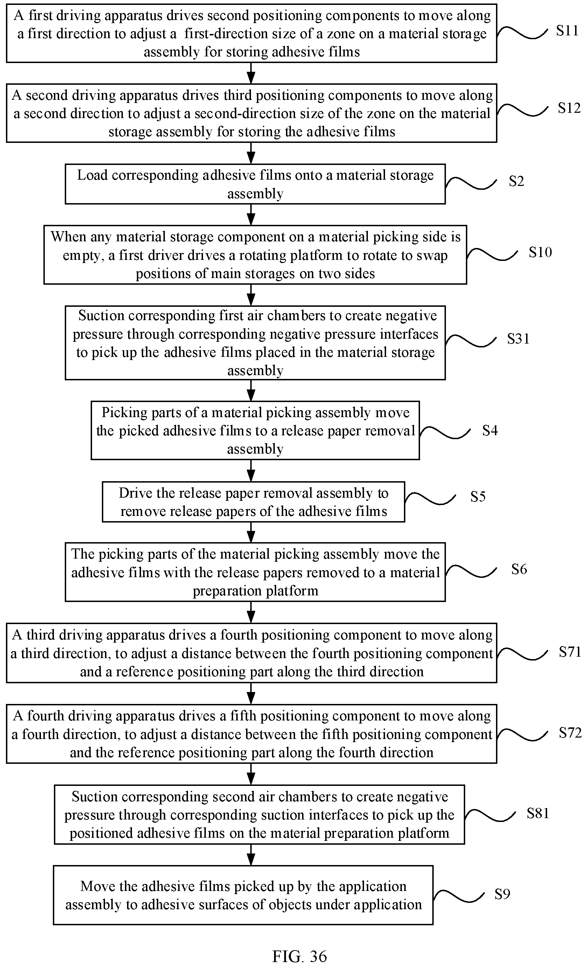

In an embodiment, referring to FIG. 36, the first positioning assembly 3 includes first positioning components 31, second positioning components 32, a first driving apparatus 33, third positioning components 34, and a second driving apparatus 35. The driving a first positioning assembly 3 to move to adjust a size of a zone on a material storage assembly 2 for storing adhesive films 100 includes:
Step S11: The first driving apparatus drives the second positioning components to move along a first direction to adjust a first-direction size of a zone on the material storage assembly for storing the adhesive films.
Step S12: The second driving apparatus drives the third positioning components to move along a second direction to adjust second-direction size of the zone on the material storage assembly for storing the adhesive films.

The first-direction size of the zone on the material storage assembly 2 for storing adhesive films 100 is the distance between the second positioning component 32 and the first positioning component 31 along the first direction.

For example, referring to FIG. 3, FIG. 9, and FIG. 11, the distance between the second positioning component 32 and the first positioning component 31 along the first direction is the distance between the first positioning column 322 and the fifth positioning column 312 along the first direction.

The second-direction size of the zone on the material storage assembly 2 for storing adhesive films 100 is the distance between the third positioning component 34 and the first positioning component 31 along the second direction.

For example, referring to FIG. 3, FIG. 9, and FIG. 11, the distance between the third positioning component 34 and the first positioning component 31 along the second direction is the distance between the second positioning column 3421 and the fourth positioning column 311 along the second direction.

In this embodiment of this disclosure, with the second positioning component 32 driven to move along the first direction to adjust the distance between the second positioning component 32 and the first positioning component 31 along the first direction, the distance between the second positioning component 32 and the first positioning component 31 along the first direction is increased or decreased, correspondingly increasing or decreasing the first-direction size of the zone for storing the adhesive films 100, so as to adapt to the positioning of adhesive films 100 of different sizes along the first direction. With the third positioning component 34 driven to move along the second direction to adjust the distance between the third positioning component 34 and the first positioning component 31 along the second direction, the distance between the third positioning component 34 and the first positioning component 31 along the second direction is increased or decreased, correspondingly increasing or decreasing the second-direction size of the zone for storing the adhesive films 100, so as to adapt to the positioning of adhesive films 100 of different sizes along the second direction. With the second positioning component 32 and the third positioning component 34 moving from two different directions respectively, in the plane intersecting the vertical direction, the overall positioning of adhesive films 100 of different sizes in the material storage assembly 2 can be realized.

In an embodiment, referring to FIG. 36, the second positioning assembly 7 includes a fourth positioning component 71, a third driving apparatus 72, a fifth positioning component 73, and a fourth driving apparatus 74. The driving a second positioning assembly 7 to move to position the adhesive film 100 on the material preparation platform 6 includes:
Step S71: The third driving apparatus drives the fourth positioning component to move along a third direction, to adjust a distance between the fourth positioning component and a reference positioning part along the third direction.
Step S72: The fourth driving apparatus drives the fifth positioning component to move along a fourth direction, to adjust a distance between the fifth positioning component and the reference positioning part along the fourth direction.

For example, referring to FIG. 17 and FIG. 18, the distance between the fourth positioning component 71 and the reference positioning part 61 along the third direction is: a distance between a first positioning protrusion part 7121 and the reference positioning part 61 along the third direction.

For example, referring to FIG. 17 and FIG. 18, the distance between the fifth positioning component 73 and the reference positioning part 61 along the fourth direction is: a distance between a second positioning protrusion part 7321 and the reference positioning part 61 along the fourth direction.

In this embodiment of this disclosure, with the fourth positioning component 71 driven to move along the third direction to adjust the distance between the fourth positioning component 71 and the reference positioning part 61 along the third direction, the distance between the fourth positioning component 71 and the reference part along the third direction is increased or decreased, thereby positioning the adhesive films 100 of different sizes on the material preparation platform 6 along the third direction. With the fifth positioning component 73 driven to move along the fourth direction to adjust the distance between the fifth positioning component 73 and the reference positioning part 61 along the fourth direction, the distance between the fifth positioning component 73 and the reference positioning part 61 along the fourth direction is increased or decreased, thereby positioning the adhesive films 100 of different sizes on the material preparation platform 6 along the fourth direction. With the fourth positioning component 71 and the fifth positioning component 73 moving from two different directions respectively, in the plane intersecting the vertical direction, the overall positioning of adhesive films 100 of different sizes on the material preparation platform 6 can be realized.

In an embodiment, referring to FIG. 36, the picking up, by the picking parts 41 of the material picking assembly 4, the adhesive films 100 placed in the material storage assembly 2 includes:
Step S31: Suction corresponding first air chambers to create negative pressure through corresponding negative pressure interfaces to pick up the adhesive films placed in the material storage assembly.

In this embodiment of this disclosure, which first air chambers are suctioned to create negative pressure is determined according to the sizes of the corresponding adhesive films 100. Smaller adhesive films 100 can be suctioned to create negative pressure with fewer first air chambers according to the actual situation, which can achieve the purpose of sucking up the adhesive films 100 and reduce the energy consumption of negative pressure suction to a certain extent.

It should be understood that the embodiments of this disclosure are not limited to suctioning the corresponding first air chambers to create negative pressure according to a size of a corresponding adhesive film 100. For example, adhesive films 100 of various different sizes can be sucked up by suctioning all first air chambers to create negative pressure, sparing the need of adaptively adjusting the material picking assembly 4.

In an embodiment, referring to FIG. 36, driving the application assembly 8 to pick up the positioned adhesive film 100 on the material preparation platform 6, including:
Step S81: Suction corresponding second air chambers to create negative pressure through corresponding suction interfaces to pick up the positioned adhesive films on the material preparation platform.

In this embodiment of this disclosure, which second air chambers are suctioned to create negative pressure is determined according to sizes of corresponding adhesive films 100. Smaller adhesive films 100 can be suctioned to create negative pressure with fewer second air chambers according to the actual situation, which can achieve the purpose of sucking up the adhesive films 100 and reduce the energy consumption of negative pressure suction to a certain extent.

It should be understood that the embodiments of this disclosure are not limited to suctioning the corresponding second air chamber to create negative pressure by sizes of corresponding adhesive films 100. For example, adhesive films 100 of various different sizes can be sucked up by suctioning all the second air chambers to create negative pressure, with no need to adaptively adjust the application assembly 8.

In an embodiment, referring to FIG. 36, the material storage assembly 2 includes a first driver 21, a rotating platform 22, and main storages 23. The first driver 21 drives the rotating platform 22 to rotate, and a plane coinciding with a rotation centerline of the rotating platform 22 is a reference plane 221. One side of two opposite sides of the reference plane 221 corresponding to the rotating platform 22 is a material loading side for loading the adhesive films, and the other side is a material picking side for picking the adhesive films. The adhesive application method further includes:
Step S10: When any material storage component on the material picking side is empty, the first driver drives the rotating platform to rotate to swap positions of the main storages on two sides.

Empty material storage components 231 mean that adhesive films 100 on the material storage components 231 have been picked up, and there are no adhesive films 100 on the corresponding material storage components 231.

In this embodiment of this disclosure, when any material storage component 231 on the material picking side is empty, the material picking assembly 4 cannot pick up adhesive films 100 from corresponding material storage components 231. In this case, the rotating platform 22 is driven to rotate, and material storage components 231 with adhesive films 100 loaded on the material loading side is rotated to the material picking side for the material picking assembly 4 to pick up the adhesive films 100, and empty material storage components 231 are rotated to the material loading side for loading the adhesive films 100. The loading of the adhesive films 100 and the picking of the adhesive films 100 by the material picking assembly 4 do not affect each other, improving operational efficiency.

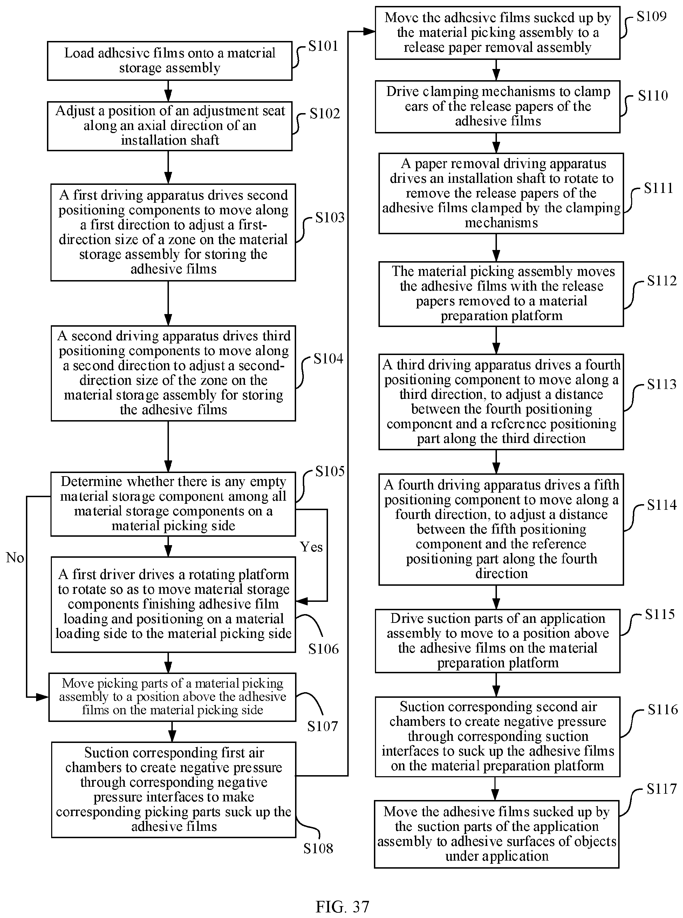

Referring to FIG. 37, the adhesive application method is described through the following embodiment.

Step S101: Load adhesive films onto a material storage assembly.

Step S102: Adjust a position of an adjustment seat along an axial direction of an installation shaft.

Step S103: A first driving apparatus drives second positioning components to move along a first direction to adjust a first-direction size of a zone on the material storage assembly for storing the adhesive films.

Step S104: A second driving apparatus drives third positioning components to move along a second direction to adjust a second-direction size of the zone on the material storage assembly for storing the adhesive films.

Step S105: Determine whether there is any empty material storage component among all material storage components on a material picking side.

If yes, execute step S106; and if no, execute step S107.

Step S106: A first driver drives a rotating platform to rotate so as to move material storage components finishing adhesive film loading and positioning on a material loading side to the material picking side.

Step S107: Move picking parts of a material picking assembly to a position above the adhesive films on the material picking side.

Step S108: Suction corresponding first air chambers to create negative pressure through corresponding negative pressure interfaces to make corresponding picking parts suck up the adhesive films.

Step S109: Move the adhesive films sucked up by the material picking assembly to a release paper removal assembly.

Step S110: Drive clamping mechanisms to clamp ears of the release papers of the adhesive films.

Step S111: A paper removal driving apparatus drives an installation shaft to rotate to remove the release papers of the adhesive films clamped by the clamping mechanisms.

Step S112: The material picking assembly moves the adhesive films with the release papers removed to a material preparation platform.

Step S113: A third driving apparatus drives a fourth positioning component to move along a third direction, to adjust a distance between the fourth positioning component and a reference positioning part along the third direction.

Step S114: A fourth driving apparatus drives a fifth positioning component to move along a fourth direction, to adjust a distance between the fifth positioning component and the reference positioning part along the fourth direction.

Step S115: Drive suction parts of an application assembly to move to a position above the adhesive films on the material preparation platform.

Step S116: Suction corresponding second air chambers to create negative pressure through corresponding suction interfaces to suck up the adhesive films on the material preparation platform.

Step S117: Move the adhesive films sucked up by the suction parts of the application assembly to adhesive surfaces of objects under application.

It should be noted that the above embodiments are merely intended for describing the technical solutions of this disclosure but not for limiting this disclosure. Although this disclosure is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this disclosure. They should all be covered in the scope of this disclosure. In particular, as long as there is no structural conflict, the various technical features mentioned in the embodiments can be combined in any manners.

### Industrial applicability

With the first positioning assembly at least partially moving together with the material storage assembly in the embodiments of this disclosure, the positioning position of the first positioning assembly relative to the material storage assembly changes, thereby enabling the positioning of adhesive films of different sizes in the material storage assembly. Adhesive films of different sizes in the material storage assembly can be accurately positioned by the first positioning assembly, facilitating the material picking assembly to grab the adhesive films in the material storage assembly. Since the second positioning assembly is capable of at least partially moving together with the material preparation platform, the positioning position of the second positioning assembly relative to the material preparation platform changes, thereby enabling the positioning of adhesive films of different sizes on the material preparation platform. Adhesive films of different sizes on the material preparation platform can be accurately positioned by the second positioning assembly, facilitating the application assembly to grab the adhesive films on the material preparation platform. The material storage assembly and the first positioning assembly can be suitable for loading adhesive films of different sizes. The material picking assembly picks up the adhesive films in the material storage assembly and moves them to the release paper removal assembly for paper removal operation. The material picking assembly places the adhesive films with the release papers removed on the material preparation platform. The material preparation platform and the second positioning assembly can be suitable for placing the adhesive films of different sizes with the release papers removed at accurate positions, so that the application assembly picks up the adhesive films on the material preparation platform for application. Therefore, adhesive films of different sizes can be loaded onto the adhesive application device and applied to objects under application through the adhesive application device, achieving compatibility of the adhesive application device with adhesive films of various different sizes. Adapting to adhesive films of various different sizes through movement and adjustment spares the need of replacing the hardware structure of the adhesive application device to fit adhesive films of different sizes.

## Claims

1. An adhesive application device, comprising:
a rack;
a material storage assembly, disposed on the rack, wherein the material storage assembly is configured to store adhesive films;
a first positioning assembly, disposed on the material storage assembly, wherein the first positioning assembly is capable of at least partially moving together with the material storage assembly to position the adhesive films placed in the material storage assembly;
a material picking assembly, disposed on the rack, wherein the material picking assembly has picking parts, the picking parts are configured to pick up the adhesive films placed in the material storage assembly, and an arrangement direction of the material picking assembly and the rack is a vertical direction;
a release paper removal assembly, disposed on the rack, and configured to remove release papers of the adhesive films picked up by the picking parts;
a material preparation platform, connected to the rack, and configured to bear the adhesive films with the release papers removed, wherein the picking parts are capable of reciprocating between the material storage assembly, the release paper removal assembly, and the material preparation platform;
a second positioning assembly, disposed on the material preparation platform, wherein the second positioning assembly is capable of at least partially moving together with the material preparation platform to position the adhesive films placed on the material preparation platform; and
an application assembly, disposed on the rack, wherein the application assembly is configured to pick up the adhesive films on the material preparation platform for application.

2. The adhesive application device according to claim 1, wherein the first positioning assembly comprises:
first positioning components, connected to the material storage assembly;
second positioning components, movably disposed on the material storage assembly;
a first driving apparatus, installed on the material storage assembly, wherein the first driving apparatus drives the second positioning components to move along a first direction, and the second positioning components and the first positioning components are configured to position the adhesive films along the first direction;
third positioning components, movably disposed on the material storage assembly; and
a second driving apparatus, installed on the material storage assembly, wherein the second driving apparatus drives the third positioning components to move along a second direction, the second direction intersecting the first direction, and both the first direction and the second direction disposed to intersect the vertical direction, and the third positioning components and the first positioning components are configured to position the adhesive films along the second direction.

3. The adhesive application device according to claim 2, wherein the material storage assembly comprises:
a first driver, installed on the rack;
a rotating platform, installed on the first driver, wherein the first driver drives the rotating platform to rotate, a plane coinciding with a rotation centerline of the rotating platform is a reference plane, the first positioning assembly is provided on each of two opposite sides of the reference plane, the first positioning component is connected to the rotating platform, the second positioning component and the third positioning component are both movably disposed on the rotating platform, and the first driving apparatus and the second driving apparatus are both installed on the rotating platform, wherein one side of the two opposite sides of the reference plane corresponding to the rotating platform is a material loading side for loading the adhesive films, and the other side is a material picking side for picking the adhesive films; and
main storages, disposed on the rotating platform, wherein main storages are provided on each of two opposite sides of the reference plane, and adhesive films stored in the main storages on each side are positioned by the corresponding first positioning assembly.

4. The adhesive application device according to claim 3, wherein the main storage on each side comprises multiple material storage components arranged sequentially along the first direction, the material storage component is configured to store adhesive films, the material storage component has a first avoidance zone extending along the first direction, and the second positioning component comprises:
a first mounting base, wherein a projection zone of the first mounting base along the vertical direction is a first shadow zone, a projection zone of the material storage component along the vertical direction is a second shadow zone, the first shadow zone overlaps with multiple second shadow zones arranged along the first direction, the first mounting base is disposed below the rotating platform, and the first driving apparatus drives the first mounting base to move along the first direction; and
a first positioning column, connected above the first mounting base, wherein the first positioning column passes through the rotating platform, the first positioning column is disposed at a corresponding position of each material storage component, and the first positioning column is capable of moving within the corresponding first avoidance zone.

5. The adhesive application device according to claim 4, wherein the adhesive application device further comprises detectors, the first mounting base has a first avoidance cavity, the rotating platform has second avoidance cavities, the material storage component has a third avoidance cavity, the detector has a detection part configured to generate a detection signal, a projection zone of the first avoidance cavity, a projection zone of the second avoidance cavity, and a projection zone of the third avoidance cavity along the vertical direction are all covered by a projection zone of the detection part, the detection signal of the detection part passes through the first avoidance cavity, the second avoidance cavity, and the third avoidance cavity, and when the rotating platform rotates, the detector is below the first mounting base and the detector is detached from the rotating platform.

6. The adhesive application device according to claim 5, wherein the detectors are provided on two opposite sides of the reference plane, detectors corresponding to main storages on the material loading side of the main storages on the two sides are connected to the rack, the material storage component has a bearing plane configured to bear the adhesive films, the material storage assembly further comprises lifting apparatuses disposed on the rack, the lifting apparatuses are located at positions corresponding to main storages on the material picking side of the main storages on the two sides, the lifting apparatus is configured to drive the material storage component on the material picking side to at least partially move to lift the bearing plane, the detector corresponding to the main storage on the material picking side is installed on the lifting apparatus, the lifting apparatus drives the detector to lift, and when the lifting apparatus descends to a lowest position, the lifting apparatus and the corresponding detector are both below the first mounting base.

7. The adhesive application device according to claim 3, wherein the main storage on each side comprises multiple material storage components arranged sequentially along the first direction, the material storage component is configured to store adhesive films, the material storage component has a second avoidance zone, and the third positioning component comprises:
a second mounting base, wherein the second mounting base extends along the first direction to positions corresponding to the multiple material storage components, the second mounting base is disposed on the rotating platform, and the second driving apparatus drives the second mounting base to move along the second direction; and
a positioning column device set, connected above the second mounting base, wherein the positioning column device set is disposed at a corresponding position of each material storage component, and the positioning column device set is capable of moving within the corresponding second avoidance zone.

8. The adhesive application device according to claim 7, wherein the material storage component has a bearing plane configured to bear the adhesive films, the second avoidance zone comprises a first sub-zone and a second sub-zone, both the first sub-zone and the second sub-zone extend along the second direction, the first sub-zone is located on a side of the second sub-zone facing towards the corresponding bearing plane along the first direction, and the positioning column device set comprises:
a second positioning column, connected above the second mounting base, wherein the second positioning column is disposed at a corresponding position of each material storage component, and the second positioning column is capable of moving within the first sub-zone, and
a third positioning column, connected above the second mounting base, wherein the third positioning column is disposed at a corresponding position of each material storage component, the third positioning column is capable of moving within the second sub-zone, and the third positioning column is located on a side of the second positioning column facing away from the reference plane along the second direction.

9. The adhesive application device according to claim 8, wherein a length direction of the bearing plane is disposed along the second direction, and the second positioning column is plate-shaped.

10. The adhesive application device according to claim 9, wherein the positioning column device set further comprises a reinforcing rib, and the reinforcing rib is connected to both the second mounting base and the plate-shaped second positioning column.

11. The adhesive application device according to claim 7, wherein the material storage component comprises a guide mechanism and a support mechanism disposed on the guide mechanism, the support mechanism is configured to store the adhesive films, the guide mechanism guides the support mechanism to move along the vertical direction, an arrangement direction of the guide mechanism and the support mechanism intersects the vertical direction, the second avoidance zone is formed in the support mechanism, and the second mounting base comprises:
a common base, wherein the common base extends along the first direction to positions corresponding to the multiple support mechanisms, the common base is disposed on the rotating platform, the common base is located on a side of the guide mechanism facing towards the reference plane along the second direction, and the second driving apparatus drives the common base to move along the second direction; and
a base, connected to the common base, wherein the base is located on a side of the common base facing away from the reference plane along the second direction, the base is disposed at a position corresponding to each support mechanism, the positioning column device set is connected above the base, and the base is capable of moving below the support mechanism along the second direction.

12. The adhesive application device according to claim 11, wherein the guide mechanism and the support mechanism are arranged along the first direction, and a length direction of the support mechanism is disposed along the second direction.

13. The adhesive application device according to claim 7, wherein the second mounting base is located above the rotating platform.

14. The adhesive application device according to claim 3, wherein the main storages are provided on each of two opposite sides of the reference plane along the second direction, the first positioning assembly has operation parts configured for manual operation to provide power, both the first driving apparatus and the second driving apparatus have the operation part, the operation part is located on a side of each main storage facing away from the reference plane along an arrangement direction of the main storages on the two sides, and the first driving apparatus comprises:
a rotating shaft, wherein an axial direction of the rotating shaft is disposed along the second direction, and the rotating shaft has a corresponding operation part,
a first bevel gear, connected to an end of the rotating shaft facing towards the reference plane, so that the first bevel gear rotates with the rotating shaft;
a second bevel gear, meshing with the first bevel gear;
a lead screw, rotatably connected to the rotating platform, wherein the second bevel gear is connected to an end of the lead screw, so that the second bevel gear rotates with the lead screw, and an axial direction of the lead screw is disposed along the first direction; and
a connecting apparatus, threadedly connected to the lead screw so that the lead screw drives the connecting apparatus to move along the first direction, wherein the connecting apparatus is installed on the second positioning component.

15. The adhesive application device according to claim 1, wherein the material preparation platform is formed with reference positioning parts, and the second positioning assembly comprises:
a fourth positioning component, movably disposed on the material preparation platform;
a third driving apparatus, installed on the material preparation platform, wherein the third driving apparatus drives the fourth positioning component to move along a third direction, and the fourth positioning component and the reference positioning part are configured to position the adhesive films along the third direction;
a fifth positioning component, movably disposed on the material preparation platform; and
a fourth driving apparatus, installed on the material preparation platform, wherein the fourth driving apparatus drives the fifth positioning component to move along a fourth direction, the fourth direction is disposed to intersect the third direction, both the third direction and the fourth direction are set to intersect the vertical direction, and the fifth positioning component and the reference positioning part are configured to position the adhesive films along the fourth direction.

16. The adhesive application device according to claim 15, wherein the material preparation platform has multiple material preparation parts, wherein the material preparation parts are configured to bear the adhesive films with the release papers removed, the multiple material preparation parts are arranged sequentially along the third direction, the reference positioning part is disposed at a position corresponding to each material preparation part, the material preparation part has third avoidance zones extending along the third direction, and the fourth positioning component comprises:
a third mounting base, disposed below the material preparation platform, wherein the third driving apparatus drives the third mounting base to move along the third direction; and
first positioning pieces, connected above the third mounting base, wherein the first positioning piece has multiple first positioning protrusion parts passing through the material preparation platform, the multiple first positioning protrusion parts are spaced apart along the fourth direction, the first positioning piece is disposed at a corresponding position of each material preparation part, and the first positioning protrusion part is capable of moving within the corresponding third avoidance zone.

17. The adhesive application device according to claim 16, wherein each material preparation part has multiple corresponding third avoidance zones, the multiple third avoidance zones are spaced apart along the fourth direction, and the first positioning protrusion part is disposed at a corresponding position of each third avoidance zone.

18. The adhesive application device according to claim 15, wherein the material preparation platform has multiple material preparation parts, wherein the material preparation parts are configured to bear the adhesive films with the release papers removed, the multiple material preparation parts are arranged sequentially along the third direction, the reference positioning part is disposed at a position corresponding to each material preparation part, the material preparation part has fourth avoidance zones extending along the fourth direction, and the fifth positioning component comprises:
a fourth mounting base, disposed on the material preparation platform, wherein the fourth driving apparatus drives the fourth mounting base to move along the fourth direction; and
second positioning pieces, connected to the fourth mounting base, wherein the second positioning piece has multiple second positioning protrusion parts, the multiple second positioning protrusion parts are spaced apart along the third direction, the second positioning piece is disposed at a corresponding position of each material preparation part, and the second positioning protrusion part is capable of moving within the corresponding fourth avoidance zone.

19. The adhesive application device according to claim 18, wherein each material preparation part has multiple corresponding fourth avoidance zones, the multiple fourth avoidance zones are spaced apart along the third direction, and the second positioning protrusion part is disposed at a corresponding position of each fourth avoidance zone.

20. The adhesive application device according to claim 18, wherein both the material preparation part and the reference positioning part are located below the fourth mounting base.

21. The adhesive application device according to claim 1, wherein the material preparation platform comprises:
a workbench, connected to the rack, wherein the second positioning assembly is disposed on the workbench; and
trays, installed above the workbench, wherein ribs configured to bear the adhesive films with the release papers removed are above the tray, multiple ribs are provided, and the multiple ribs are spaced apart.

22. The adhesive application device according to any of claims 1 to 21, wherein the material picking assembly comprises:
a first transfer part, disposed on the rack; and
material picking apparatuses, disposed on the first transfer part, wherein the first transfer part drives the material picking apparatus to move, the material picking apparatus comprises a first airflow distributor and a first suction assembly connected to each other, the first airflow distributor is disposed on the first transfer part, the first airflow distributor has first air chambers and negative pressure interfaces, multiple first air chambers are provided, the multiple first air chambers are separated from each other, each first air chamber communicates with the corresponding negative pressure interface, the picking part is formed on the first suction assembly, and each first air chamber communicates with the corresponding picking part.

23. The adhesive application device according to claim 22, wherein one of the first air chambers is a main air chamber, one of the first air chambers is a first extension air chamber, the first extension air chamber spans a side of the main air chamber along a fifth direction and a side of the main air chamber along a sixth direction, the fifth direction and the sixth direction are set to intersect each other, both the fifth direction and the sixth direction are set to intersect an arrangement direction of the first airflow distributor and the first suction assembly, one of the first air chambers is a second extension air chamber, the second extension air chamber is located on a side of the first extension air chamber along the fifth direction, one of the first air chambers is a third extension air chamber, and the third extension air chamber is located on a side of the first extension air chamber along the sixth direction.

24. The adhesive application device according to claim 23, wherein the first transfer part comprises a first transfer body and a first mounting rack disposed on the first transfer body, the first transfer body drives the first mounting rack to move, the first mounting rack is connected to a side of the first airflow distributor facing away from the first suction assembly, the negative pressure interface is located on an outer side surface of the first airflow distributor, and an arrangement direction of the first airflow distributor and the first suction assembly intersects an orientation of the negative pressure interface.

25. The adhesive application device according to claim 24, wherein a negative pressure interface communicating with the main air chamber is a first negative pressure interface, the first negative pressure interface is disposed on both a side of the main air chamber along the fifth direction and a side of the main air chamber along the sixth direction, a negative pressure interface communicating with the first extension air chamber is a second negative pressure interface, the second negative pressure interface is disposed on a side of the first extension air chamber facing towards the corresponding first negative pressure interface along the fifth direction, the second negative pressure interface is disposed on a side of the first extension air chamber facing towards the corresponding first negative pressure interface along the sixth direction, a negative pressure interface communicating with the second extension air chamber is a third negative pressure interface, the third negative pressure interface is disposed on a side of the second extension air chamber facing away from the first extension air chamber along the fifth direction, a negative pressure interface communicating with the third extension air chamber is a fourth negative pressure interface, and the fourth negative pressure interface is disposed on a side of the third extension air chamber facing away from the first extension air chamber along the sixth direction.

26. The adhesive application device according to claim 22, wherein the first suction assembly comprises:
first suction nozzles, installed on the first airflow distributor, wherein each first air chamber communicates with the corresponding first suction nozzle, and the picking part is formed on the first suction nozzle; and
a first protection block, connected to a side of the first airflow distributor facing towards the first suction nozzle, wherein the first protection block has an avoidance hole, the avoidance hole runs through the first protection block, the first suction nozzle passes through the avoidance hole, and the first suction nozzle partially protrudes from a side of the first protection block facing away from the first airflow distributor.

27. The adhesive application device according to claim 26, wherein the avoidance hole is a long hole, multiple avoidance holes are provided, the multiple avoidance holes are spaced apart, and multiple first suction nozzles within each avoidance hole are arranged sequentially along a length direction of the avoidance hole.

28. The adhesive application device according to any of claims 1 to 21, wherein the application assembly comprises:
a second transfer part, disposed on the rack; and
application apparatuses, disposed on the second transfer part, wherein the second transfer part drives the application apparatuses to move to pick up the adhesive films on the material preparation platform for application, the application apparatus comprises a second airflow distributor and a second suction assembly connected to each other, the second airflow distributor is disposed on the second transfer part, the second airflow distributor has second air chambers and suction interfaces, multiple second air chambers are provided, the multiple second air chambers are separated from each other, each second air chamber communicates with the corresponding suction interface, the second suction assembly has suction parts configured to suck the adhesive films, and each second air chamber communicates with the corresponding suction part.

29. The adhesive application device according to claim 28, wherein the second transfer part comprises a second transfer body and a second mounting rack disposed on the second transfer body, the second transfer body drives the second mounting rack to move, the second mounting rack is connected to a side of the second airflow distributor facing away from the second suction assembly, the suction interface is located on an outer side surface of the second airflow distributor, and an arrangement direction of the second airflow distributor and the second suction assembly intersects an orientation of the suction interface; one of the second air chambers is an edge air chamber, the edge air chamber comprises a first sub-chamber and a second sub-chamber communicating with each other, the first sub-chamber extends along a seventh direction, the second sub-chamber extends along an eighth direction, the seventh direction and the eighth direction are set to intersect each other, both the seventh direction and the eighth direction are set to intersect the arrangement direction of the second airflow distributor and the second suction assembly, a suction interface communicating with the first sub-chamber is a first suction interface, the first suction interface is located on an end of the first sub-chamber facing away from the second sub-chamber along the seventh direction, a suction interface communicating with the second sub-chamber is a second suction interface, and the second suction interface is located on an end of the second sub-chamber facing away from the first sub-chamber along the eighth direction; and all the second air chambers except for the edge air chamber are auxiliary air chambers, the auxiliary air chambers are located on a side of the first sub-chamber facing towards the second suction interface, and the auxiliary air chambers are located on a side of the second sub-chamber facing towards the first suction interface.

30. The adhesive application device according to any of claims 1 to 21, wherein the release paper removal assembly comprises:
a paper removal driving apparatus, disposed on the rack;
an installation shaft, disposed on the paper removal driving apparatus, wherein the paper removal driving apparatus drives the installation shaft to move;
adjustment seats, having a locked state and an unlocked state, wherein the adjustment seat moves with the installation shaft in the locked state, and the adjustment seat is capable of moving relative to the installation shaft along an axial direction of the installation shaft in the unlocked state; and
clamping mechanisms, disposed on the adjustment seats to move with the adjustment seats, wherein the clamping mechanisms are configured to clamp the release paper of the adhesive film, multiple clamping mechanisms are provided, and the multiple clamping mechanisms are spaced apart along the axial direction of the installation shaft.

31. An adhesive application method, comprising:
driving a first positioning assembly to move to adjust a size of a zone on a material storage assembly for storing adhesive films;
loading the corresponding adhesive films onto the material storage assembly;
picking up, by picking parts of a material picking assembly, the adhesive films placed in the material storage assembly;
moving, by the picking parts of the material picking assembly, the picked adhesive films to a release paper removal assembly;
driving the release paper removal assembly to remove release papers of the adhesive films;
moving, by the picking parts of the material picking assembly, the adhesive films with the release papers removed to a material preparation platform;
driving a second positioning assembly to move to position the adhesive films on the material preparation platform;
driving an application assembly to pick up the positioned adhesive films on the material preparation platform; and
moving the adhesive films picked up by the application assembly to adhesive surfaces of objects under application.

32. The adhesive application method according to claim 31, wherein the first positioning assembly comprises first positioning components, second positioning components, a first driving apparatus, third positioning components, and a second driving apparatus, and the driving a first positioning assembly to move to adjust a size of a zone on a material storage assembly for storing adhesive films comprises:
driving, by the first driving apparatus, the second positioning components to move along a first direction so as to adjust a first-direction size of the zone on the material storage assembly for storing the adhesive films; and
driving, by the second driving apparatus, the third positioning components to move along a second direction so as to adjust a second-direction size of the zone on the material storage assembly for storing the adhesive films.

33. The adhesive application method according to claim 31, wherein the second positioning assembly comprises a fourth positioning component, a third driving apparatus, a fifth positioning component, and a fourth driving apparatus, and the driving a second positioning assembly to move to position the adhesive films on the material preparation platform comprises:
driving, by the third driving apparatus, the fourth positioning component to move along a third direction so as to adjust a distance between the fourth positioning component and a reference positioning part along the third direction; and
driving, by the fourth driving apparatus, the fifth positioning component to move along a fourth direction so as to adjust a distance between the fifth positioning component and the reference positioning part along the fourth direction.

34. The adhesive application method according to claim 31, wherein the picking up, by picking parts of a material picking assembly, the adhesive films placed in the material storage assembly comprises:
suctioning corresponding first air chambers through corresponding negative pressure interfaces to create negative pressure, to pick up the adhesive films placed in the material storage assembly.

35. The adhesive application method according to claim 31, wherein the driving an application assembly to pick up the positioned adhesive films on the material preparation platform comprises:
suctioning corresponding second air chambers through corresponding suction interfaces to create negative pressure, to pick up the adhesive films placed on the material preparation platform.

36. The adhesive application method according to claim 31, wherein the material storage assembly comprises a first driver, a rotating platform, and main storages, the first driver drives the rotating platform to rotate, and a plane coinciding with a rotation centerline of the rotating platform is a reference plane, wherein one side of two opposite sides of the reference plane corresponding to the rotating platform is a material loading side for loading the adhesive films, and the other side is a material picking side for picking the adhesive films; and the adhesive application method further comprises:
when any material storage component on the material picking side is empty, driving, by the first driver, the rotating platform to rotate to swap positions of the main storages on the two sides.
